# EUROPEAN PATENT APPLICATION

(11) **EP 4 407 725 A1**
(43) Date of publication of application: **31.07.2024**
(21) Application number: 22936830.3
(22) Date of filing: 12.04.2022
(51) Int. Cl.: H01M 10/04, H01M 10/0583, H01M 10/058, G01B 11/00, G01N 21/89, G01N 21/84, G01N 21/86, B65H 23/032

(54) **MATERIAL-STRIP FEEDING INSPECTION METHOD AND APPARATUS FOR STACKING MACHINE, AND STACKING MACHINE, DEVICE AND MEDIUM**

(71) Applicant: Contemporary Amperex Technology Co., Limited, Ningde, Fujian 352100 (CN)
(72) Inventor: ZHAO, Baiquan, Ningde, Fujian 352100 (CN); LI, Hongyuan, Ningde, Fujian 352100 (CN); FENG, Shiping, Ningde, Fujian 352100 (CN); ZHENG, Qiuhui, Ningde, Fujian 352100 (CN); CHEN, Canbin, Ningde, Fujian 352100 (CN); DAI, Ya, Ningde, Fujian 352100 (CN)
(74) Representative: Frick, Robert
(86) International application number: PCT/CN2022/086442
(87) International publication number: WO 2023/197176

(57) **Abstract**

The present disclosure provides a material strip feeding detection method for a stacking machine, a material strip feeding detection apparatus for a stacking machine, a stacking machine, an electronic device, and a non-transitory computer-readable storage medium. The material strip (800, 1310, 1410, 1510, 1610, 1710, 1810) comprises a plurality of first electrode plates distributed continuously in a feeding direction (104, 801, 1311, 1511). The material strip feeding detection method comprises: shooting with at least one set of camera apparatuses (1340, 1421, 1422, 1541, 1542, 1621, 1622, 1721, 1722, 1821, 1822) to obtain at least one material strip image (500, 810, 820); determining whether the material strip image (500, 810, 820) comprises a first marker and a second marker; acquiring a target deviation of the first marker relative to a preset position based on the material strip image (500, 810, 820) in response to determining that the material strip image (500, 810, 820) comprises the first marker, controlling the material strip feeding detection apparatus to perform feeding deviation rectification of the material strip (800, 1310, 1410, 1510, 1610, 1710, 1810) conveyed on a conveying mechanism based on the target deviation, and controlling a cutting mechanism (1370, 1570) to cut the material strip (800, 1310, 1410, 1510, 1610, 1710, 1810) on the conveying mechanism after the feeding deviation rectification; determining a complete first electrode plate based on the first marker, to ensure that a complete material strip image (500, 810, 820) is obtained, and determining the feeding based on the first marker; the second marker is used for indicating the lamination position for a second electrode plate that is of an opposite polarity to the first electrode plate on the material strip (800, 1310, 1410, 1510, 1610, 1710, 1810).

## Description

### Technical Field

The present application relates to the technical field of batteries, and in particular to a material strip feeding detection method and apparatus for a stacking machine, a stacking machine, a device, and a medium.

### Background Art

Energy saving and emission reduction are the key to the sustainable development of automobile industry, and electric vehicles have become an important part of the sustainable development of automotive industry due to their advantages of energy saving and environmental protection. For electric vehicles, battery technology is an important factor related to their development.

In the production process of power batteries, stacking is one of the important processes. The stacking is to stack continuous strip-shaped electrode plates into a multi-layered rectangular shape, mainly by means of the free stacking process and the continuous stacking process. In the continuous stacking process, the material strip feeding process requires efficient determination of the cut hole deviation of the material strip and the lamination position for laminating an electrode plate.

### Summary of the Invention

The present application is intended to at least solve one of the technical problems existing in the prior art. To this end, an objective of the present application is to propose a material strip feeding detection method and apparatus for a stacking machine, a stacking machine, a device, and a medium, so as to improve the efficiency of determining the cut hole deviation of the material strip and the lamination position for laminating an electrode plate.

Embodiments of the first aspect of the present application provides a material strip feeding detection method for a stacking machine, wherein the material strip comprises a plurality of first electrode plates distributed continuously in a feeding direction, and the material strip feeding detection method comprises: shooting with at least one camera apparatus to obtain at least one material strip image; determining whether the material strip image comprises a first marker; and acquiring a target deviation of the first marker relative to a preset position based on the material strip image in response to determining that the material strip image comprises the first marker.

In the technical solution of embodiments of the present application, a target deviation of a first marker is acquired by shooting a material strip image with a camera apparatus and identifying the first marker based on this material strip image. Compared with detection by sensors, through computer vision, it is possible to improve the accuracy of detection of cut holes, and then to determine the complete first electrode plate based on the first marker, to ensure that the complete material strip image is obtained, and to determine the feeding deviation based on the first marker.

In some embodiments, the material strip image at least comprises a detection region between two adjacent first electrode plates. Thus, the efficiency of detection can be further improved by first determining a detection region in the material strip image, and then determining whether the detection region contains a first marker and a second marker.

In some embodiments, wherein the first marker is a through hole disposed in the detection region, and the material strip feeding detection method for a stacking machine further comprises: before shooting with the at least one camera apparatus, turning on a front light source, light emitted from the front light source being projected onto the front face of the detection region, and/or turning on a back light source, light emitted from the back light source being projected onto the back face of the detection region; and determining whether the material strip image comprises a second marker, the second marker being a preset pattern formed on the front face of the detection region. Thus, by arranging the front light source and the back light source at the same time, it is possible to enable the camera apparatus to capture a material strip image containing both the first marker and the second marker, thereby realizing the simultaneous detection of the second marker and the first mark; at the same time, it is possible to further improve the image clarity of the first marker in the material strip image, thus enhancing the accuracy of detection of the first marker.

In some embodiments, the first marker comprises a first cut hole and a second cut hole, and the first cut hole and the second cut hole are located on two opposite sides of the material strip in a direction perpendicular to the feeding direction; and the detection region comprises a first detection region and a second detection region located between the two adjacent first electrode plates, the first cut hole being located in the first detection region and the second cut hole being located in the second detection region; and the at least one camera apparatus comprises a first camera apparatus and a second camera apparatus, and the material strip image comprises a first detection image obtained by shooting the front face of the first detection region using the first camera apparatus and a second detection image obtained by shooting the front face of the second detection region using the second camera apparatus, wherein acquiring a target deviation of the first marker relative to a preset position based on the material strip image comprises: acquiring the target deviation based on the first detection image and/or the second detection image in response to determining that the first detection region and the second detection region comprise the first marker.

Thus, by disposing the first camera apparatus and the second camera apparatus on the two sides of the material strip in the feeding direction, respectively, the first detection image and the second detection image are captured respectively for opposite positions on the two sides of the material strip in the feeding direction, thus making it possible to analyze the two detection images at the same time and acquire the target deviation, which improves the accuracy of calculation of the deviation.

In some embodiments, acquiring the target deviation based on the first detection image and/or the second detection image comprises: acquiring a first deviation of the first cut hole relative to a preset position based on the first detection image; acquiring a second deviation of the second cut hole relative to a preset position based on the second detection image; and acquiring the target deviation based on the first deviation and the second deviation.

Thus, by disposing the first camera apparatus and the second camera apparatus on the two sides of the material strip in the feeding direction, respectively, the first detection image and the second detection image are captured respectively for opposite positions on the two sides of the material strip in the feeding direction, thus making it possible to acquire the deviations of two cut holes at the opposite positions on the material strip based on the two detection images, respectively, and calibrate the deviation calculation results to acquire the target deviation, which improves the accuracy of calculation of the target deviation.

In some embodiments, acquiring the target deviation based on the first deviation and the second deviation comprises: acquiring the target deviation based on the first deviation and the second deviation in response to an absolute value of a difference between the first deviation and the second deviation being not greater than a preset threshold. During the process of calibration, when the error between the first deviation and the second deviation acquired through the two detection images, respectively, is within the preset range, the target deviation can be acquired based on the first deviation and the second deviation (e.g., by averaging the first deviation and the second deviation), thereby improving the accuracy of calculation of the deviation.

In some embodiments, the material strip feeding detection method for a stacking machine further comprises: outputting alert information in response to an absolute value of a difference between the first deviation and the second deviation being greater than a preset threshold. During the process of calibration, when the error between the first deviation and the second deviation acquired through the two detection images, respectively, exceeds the preset range, alarm information is immediately sent, thereby enabling timely alarm for adjustment when there is an obvious error in the deviation results acquired through the two camera apparatuses, thus improving the speed of problem discovery and the efficiency of information feedback.

In some embodiments, the material strip feeding detection method for a stacking machine further comprises: outputting alert information in response to determining that at least one of the first detection region and the second detection region does not comprise the first marker. The alarm information is sent when cut holes in the two images are not detected at the same time in the two detection images, so that the problematic electrode plate material strip can be handled in a timely manner, which improves the speed of discovering the problematic material strip and the efficiency of information feedback.

In some embodiments, the detection region comprises a first detection region and a second detection region located between the two adjacent first electrode plates, and the second marker comprises a first marker portion located in the first detection region and a second marker portion located in the second detection region, wherein determining whether the material strip image comprises a second marker comprises: detecting whether the first detection image comprises the first marker portion; detecting whether the second detection image comprises the second marker portion; and determining whether the front face of the detection region comprises the second marker based on a detection result regarding the first marker portion in the first detection image and a detection result regarding the second marker portion in the second detection image.

Thus, by disposing the first camera apparatus and the second camera apparatus on the two sides of the material strip in the feeding direction, the first detection image and the second detection image are captured for opposite positions on the two sides of the material strip in the feeding direction, respectively, thus making it possible to acquire the marker portion detection results respectively for the opposite positions on the two sides of the material strip based on the two detection images, so as to acquire the final second-marker detection result, which improves the accuracy of the second-marker detection result.

In some embodiments, determining whether the front face of the detection region comprises the second marker comprises: determining that the front face of the detection region comprises the second marker in response to determining that the first detection image comprises the first marker portion and the second detection image comprises the second marker portion. Thus, it is possible to acquire the marker portion detection results for the opposite positions on the two sides of the material strip based on the two detection images, respectively, and to perform mutual verification of the detection results by comparing the two detection results, so as to acquire the final second-marker detection result and judge the lamination position for laminating an electrode plate, thereby improving the accuracy of the detection results and judgment of the lamination position.

In some embodiments, the material strip feeding detection method for a stacking machine further comprises: outputting alert information in response to determining that one of the first detection image and the second detection image does not comprise the second marker. Thus, it is possible to acquire the marker portion detection results for the opposite positions on the two sides of the material strip based on the two detection images, respectively, and to perform mutual verification of the detection results by comparing the two detection results, so that when the two detection results are inconsistent, an alarm can be triggered in time to make adjustments, thereby improving the speed of problem discovery and the efficiency of information feedback.

In some embodiments, the material strip feeding detection method for a stacking machine further comprises: determining that the back face of the detection region comprises the second marker in response to determining that neither of the first detection image and the second detection image comprises the second marker. Thus, it is possible to realize the detection of the second marker on the front face and the back face of the electrode plate material strip at the same time by simply disposing a camera apparatus on the front face of the electrode plate material strip without the need for disposing a camera apparatus on the back face, thereby simplifying the structure of the device and reducing the cost of the device.

In some embodiments, the at least one camera apparatus comprises two sets of camera apparatuses, the two sets of camera apparatuses being disposed at an interval of a preset distance, and shooting the detection region between the two adjacent first electrode plates using the at least one camera apparatus comprises: shooting the front face of the detection region between the two adjacent first electrode plates using one set of the two sets of camera apparatuses; and shooting the back face of the detection region between the two adjacent first electrode plates using the other set of the two sets of camera apparatuses. By disposing two sets of camera apparatuses at intervals on the front face and the back face of the material strip, respectively, it is possible to realize the function of simultaneous detection of the second marker on the front face and the back face of the material strip, thus further improving the accuracy of the second-marker detection result and the judgment of the lamination position.

In some embodiments, the target deviation comprises a deviation of the first marker relative to the preset position in the feeding direction. Thus, by determining a preset position that is fixed relative to the cutting mechanism, the deviation of the material strip relative to the cutting mechanism can be accurately and conveniently calculated based on the distance between this preset position and the first marker.

In some embodiments, the position of the at least one camera apparatus is fixed, and the preset position is an optical center of the corresponding camera apparatus. The position of the camera apparatus is fixed, i.e., the relative distance between the camera apparatus and the cutting mechanism is fixed, which makes it possible to calculate the deviation of the material strip by simply acquiring the relative distance of the first marker to the optical center of the camera apparatus, thus saving resources for calculating the deviation of the material strip and improving the efficiency of calculating the deviation of the material strip.

Embodiments of the second aspect of the present application provide a material strip feeding detection apparatus for a stacking machine, wherein the material strip comprises a plurality of first electrode plates distributed continuously in a feeding direction, and the material strip feeding detection apparatus comprises: at least one camera apparatus configured to shoot the material strip to obtain at least one material strip image; and an image processing apparatus configured to determine whether the material strip image comprises a first marker, and determine a target deviation of the first marker relative to a preset position based on the material strip image in response to determining that the material strip image comprises the first marker.

In the technical solution of embodiments of the present application, a target deviation of a first marker is acquired by shooting a material strip image with a camera apparatus and identifying the first marker based on this material strip image. Compared with detection by sensors, through computer vision, it is possible to improve the accuracy of detection of cut holes, and then to determine the complete first electrode plate based on the first marker, to ensure that the complete material strip image is obtained, and to determine the feeding deviation based on the first marker.

In some embodiments, the image processing apparatus comprises: a first determination unit configured to determine whether the material strip image comprises the first marker; and an acquisition unit configured to acquire a target deviation of the first marker relative to a preset position based on the material strip image in response to determining that the material strip image comprises the first marker.

In some embodiments, the target deviation comprises a deviation of the first marker relative to the preset position in the feeding direction. Thus, by determining a preset position that is fixed relative to the cutting mechanism, the deviation of the material strip relative to the cutting mechanism can be accurately and conveniently calculated based on the distance between this preset position and the first marker.

In some embodiments, the material strip image at least comprises a detection region between two adjacent first electrode plates.

In some embodiments, the first marker is a through hole disposed in the detection region, and the material strip feeding detection apparatus for a stacking machine further comprises: a front light source and a back light source; and a first controller configured to, before shooting with the at least one camera apparatus, turn on the front light source, light emitted from the front light source being projected onto the front face of the detection region, and/or turn on the back light source, light emitted from the back light source being projected onto the back face of the detection region; and the first determination unit is further configured to determine whether the material strip image comprises a second marker, the second marker being a preset pattern formed on the front face of the detection region. Thus, by arranging the front light source and the back light source at the same time, it is possible to enable the camera apparatus to capture a material strip image containing both the first marker and the second marker, thereby realizing the simultaneous detection of the second marker and the first mark; at the same time, it is possible to further improve the image clarity of the first marker in the material strip image, thus enhancing the accuracy of detection of the first marker.

In some embodiments, the first marker comprises a first cut hole and a second cut hole, and the first cut hole and the second cut hole are located on two opposite sides of the material strip in a direction perpendicular to the feeding direction; and the detection region comprises a first detection region and a second detection region located between the two adjacent first electrode plates, the first cut hole being located in the first detection region and the second cut hole being located in the second detection region; and the at least one camera apparatus comprises a first camera apparatus and a second camera apparatus, and the material strip image comprises a first detection image obtained by shooting the front face of the first detection region using the first camera apparatus and a second detection image obtained by shooting the front face of the second detection region using the second camera apparatus, wherein the acquisition unit is configured to: acquire the target deviation based on the first detection image and/or the second detection image in response to determining that the first detection region and the second detection region comprise the first marker.

Thus, by disposing the first camera apparatus and the second camera apparatus on the two sides of the material strip in the feeding direction, respectively, the first detection image and the second detection image are captured respectively for opposite positions on the two sides of the material strip in the feeding direction, thus making it possible to analyze the two detection images at the same time and acquire the target deviation, which improves the accuracy of calculation of the deviation.

In some embodiments, the acquisition unit is configured to: acquire a first deviation of the first cut hole relative to a preset position based on the first detection image; acquire a second deviation of the second cut hole relative to a preset position based on the second detection image; and acquire the target deviation based on the first deviation and the second deviation.

Thus, by disposing the first camera apparatus and the second camera apparatus on the two sides of the material strip in the feeding direction, respectively, the first detection image and the second detection image are captured respectively for opposite positions on the two sides of the material strip in the feeding direction, thus making it possible to acquire the deviations of two cut holes at the opposite positions on the material strip based on the two detection images, respectively, and calibrate the deviation calculation results to acquire the target deviation, which improves the accuracy of calculation of the target deviation.

In some embodiments, the acquisition unit is further configured to: acquire the target deviation based on the first deviation and the second deviation in response to an absolute value of a difference between the first deviation and the second deviation being not greater than a preset threshold. During the process of calibration, when the error between the first deviation and the second deviation acquired through the two detection images, respectively, is within the preset range, the target deviation can be acquired based on the first deviation and the second deviation (e.g., by averaging the first deviation and the second deviation), thereby improving the accuracy of calculation of the deviation.

In some embodiments, the material strip feeding detection apparatus for a stacking machine further comprises: a first output unit, wherein the first controller is further configured to control the first output unit to output alert information in response to an absolute value of a difference between the first deviation and the second deviation being greater than a preset threshold. During the process of calibration, when the error between the first deviation and the second deviation acquired through the two detection images, respectively, exceeds the preset range, alarm information is immediately sent, thereby enabling timely alarm for adjustment when there is an obvious error in the deviation results acquired through the two camera apparatuses, thus improving the speed of problem discovery and the efficiency of information feedback.

In some embodiments, the first controller is further configured to: control the first output unit to output the alert information in response to determining that at least one of the first detection region and the second detection region does not comprise the first marker. The alarm information is sent when cut holes in the two images are not detected at the same time in the two detection images, so that the problematic electrode plate material strip can be handled in a timely manner, which improves the speed of discovering the problematic material strip and the efficiency of information feedback.

In some embodiments, the detection region comprises a first detection region and a second detection region located between the two adjacent first electrode plates, and the second marker comprises a first marker portion located in the first detection region and a second marker portion located in the second detection region, wherein the first determination unit is configured to: detect whether the first detection image comprises the first marker portion; detect whether the second detection image comprises the second marker portion; and determine whether the front face of the detection region comprises the second marker based on a detection result regarding the first marker portion in the first detection image and a detection result regarding the second marker portion in the second detection image.

Thus, by disposing the first camera apparatus and the second camera apparatus on the two sides of the material strip in the feeding direction, the first detection image and the second detection image are captured for opposite positions on the two sides of the material strip in the feeding direction, respectively, thus making it possible to acquire the marker portion detection results respectively for the opposite positions on the two sides of the material strip based on the two detection images, so as to acquire the final second-marker detection result, which improves the accuracy of the second-marker detection result.

In some embodiments, the first determination unit is configured to: determine that the front face of the detection region comprises the second marker in response to determining that the first detection image comprises the first marker portion and the second detection image comprises the second marker portion. Thus, it is possible to acquire the marker portion detection results for the opposite positions on the two sides of the material strip based on the two detection images, respectively, and to perform mutual verification of the detection results by comparing the two detection results, so as to acquire the final second-marker detection result and judge the lamination position for laminating an electrode plate, thereby improving the accuracy of the detection results and judgment of the lamination position.

In some embodiments, the material strip feeding detection apparatus for a stacking machine further comprises: a second output unit, wherein the first controller is further configured to control the second output unit to output alert information in response to determining that one of the first detection image and the second detection image does not comprise the second marker. Thus, it is possible to acquire the marker portion detection results for the opposite positions on the two sides of the material strip based on the two detection images, respectively, and to perform mutual verification of the detection results by comparing the two detection results, so that when the two detection results are inconsistent, an alarm can be triggered in time to make adjustments, thereby improving the speed of problem discovery and the efficiency of information feedback.

In some embodiments, the material strip feeding detection apparatus for a stacking machine further comprises: a second determination unit configured to determine that the back face of the detection region comprises the second marker in response to determining that neither of the first detection image and the second detection image comprises the second marker. Thus, it is possible to acquire the marker portion detection results for the opposite positions on the two sides of the material strip based on the two detection images, respectively, and to perform mutual verification of the detection results by comparing the two detection results, so as to acquire the final second-marker detection result and judge the lamination position for laminating an electrode plate, thereby improving the accuracy of the detection results and judgment of the lamination position.

In some embodiments, the at least one camera apparatus comprises two sets of camera apparatuses, the two sets of camera apparatuses being disposed at an interval of a preset distance, and one set of the two sets of camera apparatuses being configured to shoot the front face of the detection region between the two adjacent first electrode plates; and the other set of the two sets of camera apparatuses being configured to shoot the back face of the detection region between the two adjacent first electrode plates. By disposing two sets of camera apparatuses at intervals on the front face and the back face of the material strip, respectively, it is possible to realize the function of simultaneous detection of the second marker on the front face and the back face of the material strip, thus further improving the accuracy of the second-marker detection result and the judgment of the lamination position.

In some embodiments, the position of the at least one camera apparatus is fixed, and the preset position is an optical center of the camera apparatus. The position of the camera apparatus is fixed, i.e., the relative distance between the camera apparatus and the cutting mechanism is fixed, which makes it possible to calculate the deviation of the material strip from the relative distance of the first marker in the image to the optical center of the camera apparatus without complicated operations such as calibration of the camera, thus saving resources for calculating the deviation of the material strip and improving the efficiency of calculating the deviation of the material strip.

In some embodiments, the front light source comprises a first front light source and a second front light source, and the first front light source and the second front light source are arranged on two opposite sides of the material strip in the direction perpendicular to the feeding direction, respectively, light emitted from the first front light source being projected onto the front face of the first detection region, and light emitted from the second front light source being projected onto the front face of the second detection region. By disposing a set of front light sources to separately light the opposite positions on the two sides of the material strip, the second marker captured by the two camera apparatuses can be made clearer, thus enhancing the identification effect; at the same time, compared with providing one front light source to illuminate the whole material strip, the disposing of a set of front light sources makes it possible to adapt to different widths of the material strip, thus saving more energy.

In some embodiments, the front light source is arranged such that an included angle between the light emitted from the front light source and a plane in which the material strip is located is 45°-75°. By disposing the front light source at a suitable lighting angle, the imaging effect of the second marker is further enhanced.

In some embodiments, the front light source is arranged such that an included angle between the light from the front light source and a plane in which the material strip is located is 45°. By disposing the front light source at an angle of 45° with respect to the material strip, the imaging effect of the second marker is further optimized.

In some embodiments, the back light source comprises a first back light source and a second back light source, and the first back light source and the second back light source are arranged on two opposite sides of the material strip in the direction perpendicular to the feeding direction, respectively, light emitted from the first back light source being projected onto the back face of the first detection region, and light emitted from the second back light source being projected onto the back face of the second detection region. By disposing a set of back light sources to separately light the opposite positions on the two sides of the material strip, the two camera apparatuses can be enabled to shoot the first marker at the edge of the material strip; at the same time, compared with illuminating the whole material strip by one back light source, the disposing of a set of back light sources makes it possible to adapt to different widths of the material strip, thus saving more energy.

In some embodiments, the back light source is a red light source. Since red light is the color light with the longest wavelength in visible light, its penetration ability is stronger, so that it can achieve better image effect for some bad cut holes such as those blocked by foreign materials or not completely pierced.

In some embodiments, the material strip feeding detection apparatus for a stacking machine further comprises: a prism cooperating with each camera apparatus, wherein the optical axis of said each camera apparatus is arranged to be parallel to a plane in which the material strip is located, and said each camera apparatus is capable of shooting a detection region between two first electrode plates of the material strip by means of the cooperating prism. Through the cooperation of the prisms and the camera apparatuses, it is possible to further save the mounting space while ensuring that the camera apparatuses capture clear images.

Embodiments of a third aspect of the present application provide a stacking machine, comprising: a conveying mechanism configured to convey a material strip; a material strip feeding detection apparatus according to the second aspect described above; a cutting mechanism; and a second controller configured to control the material strip feeding detection apparatus to perform feeding deviation rectification of the material strip conveyed on the conveying mechanism, and control the cutting mechanism to cut the material strip on the conveying mechanism after the feeding deviation rectification.

Embodiments of a fourth aspect of the present application provide an electronic device, comprising: at least one processor; and a memory communicatively connected to the at least one processor, wherein the memory stores instructions executable by the at least one processor, the instructions being executed by the at least one processor to enable the at least one processor to perform the material strip feeding detection method of the first aspect described above.

Embodiments of a fifth aspect of the present application provide a non-transitory computer-readable storage medium having computer instructions stored therein, wherein the computer instructions are used to cause a computer to perform the material strip feeding detection method of the first aspect described above.

Embodiments of a sixth aspect of the present application provide a computer program product comprising a computer program, wherein the computer program, when executed by a processor, implements the material strip feeding detection method of the first aspect described above.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

In the drawings, unless otherwise specified, like reference numerals indicate like or similar parts or elements throughout multiple drawings. These drawings are not necessarily drawn to scale. It should be understood that these accompanying drawings depict only some implementations disclosed in accordance with the present application and should not be considered as limiting the scope of the present application.
Fig. 1 is a structural schematic diagram of an anode material strip before cathode electrode plates are laminated in some embodiments of the present application;
Fig. 2 is a structural schematic diagram of the anode material strip after cathode electrode plates are laminated in some embodiments of the present application;
Fig. 3 is a cross-sectional view of the material strip of Fig. 2 along the feeding direction;
Fig. 4 is a flow chart of a material strip feeding detection method for a stacking machine in some embodiments of the present application;
Fig. 5 is a schematic diagram of a material strip image captured by a camera apparatus in some embodiments of the present application;
Fig. 6 is a flow chart of a method for detecting a first marker and a second marker in a material strip image by an image processing algorithm in some embodiments of the present application;
Fig. 7 is a flow chart of a method for calculating a target deviation from the position of a first marker in some embodiments of the present application;
Fig. 8 a schematic diagram of a detection region between two adjacent electrode plates in some embodiments of the present application;
Fig. 9 is a flow chart of a method for acquiring a target deviation based on a first detection image and/or a second detection image in some embodiments of the present application;
Fig. 10 is a flow chart of a method for determining whether a material strip image comprises a second marker in some embodiments of the present application;
Fig. 11 is a flow chart of a material strip feeding detection method for a stacking machine in some embodiments of the present application;
Fig. 12 is a structural block diagram of a material strip feeding detection apparatus for a stacking machine in some embodiments of the present application;
Fig. 13 is a partial structural schematic diagram of a material strip feeding detection apparatus along the feeding direction in some embodiments of the present application;
Fig. 14 is a partial structural schematic diagram of a material strip feeding detection apparatus along a direction perpendicular to the feeding direction in some embodiments of the present application;
Fig. 15 is a structural schematic diagram of a material strip feeding detection apparatus in some embodiments of the present application;
Fig. 16 is a partial structural schematic diagram of a material strip feeding detection apparatus along the feeding direction in some embodiments of the present application;
Fig. 17 is a partial structural schematic diagram of a material strip feeding detection apparatus along the direction perpendicular to the feeding direction in some embodiments of the present application; and
Fig. 18 is a structural schematic diagram of a material strip feeding detection apparatus for a stacking machine in some embodiments of the present application.

Description of reference numerals:
anode material strip 100, anode electrode plate 101, cut hole 102, marker portion 103, feeding direction 104;
cathode electrode plate 201, separator 202;
battery cell material strip 300, cutting position 301, cutting position 302, tail plate 303;
material strip image 500, electrode plate region 510, non-electrode plate region 520, electrode plate edge 511, cut hole 512, marker portion 513, first edge 514, cut hole detection region 515, marker portion detection region 516, image center point 530, target deviation 540;
material strip 800, feeding direction 801, first detection image 810, first cut hole 811, first marker portion 812, first preset position 813, first deviation 814, first cut hole edge 815;
second detection image 820, second cut hole 821, second marker portion 822, second preset position 823, second deviation 824, second cut hole edge 825;
material strip 1310, feeding direction 1311, unwinding apparatus 1320, transport apparatus 1330, camera apparatus 1340, front light source 1350, back light source 1360, cutting mechanism 1370;
material strip 1410, first camera apparatus 1421, second camera apparatus 1422;
material strip 1510, feeding direction 1511, unwinding apparatus 1520, transport apparatus 1530, a set of camera apparatuses 1541, a set of camera apparatuses 1542, front light source 1551, front light source 1552, back light source 1561, back light source 1562, cutting mechanism 1570;
material strip 1610, first camera apparatus 1621, second camera apparatus 1622, first front light source 1631, second front light source 1632, first back light source 1641, second back light source 1642;
material strip 1710, first camera apparatus 1721, second camera apparatus 1722, first prism 1731, second prism 1732;
material strip 1810, first camera apparatus 1821, second camera apparatus 1822, first prism 1831, second prism 1832, first front light source 1841, second front light source 1842, first back light source 1851, second back light source 1852.

### Detailed Description

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or location relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", " radial", "circumferential", "front face", "back face" and the like are based on the orientation or location relationships shown in the accompanying drawings, and are only for convenience and simplification of the description of the embodiments of the present application, but do not indicate or imply that the apparatuses or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

At present, in the production process of power batteries, stacking is one of the important processes. The stacking is to stack continuous strip-shaped electrode plates into a multi-layered rectangular shape, mainly by means of the free stacking process and the continuous stacking process. In the continuous stacking process, the material strip (e.g., anode material strip) is pulled out of the material roll by the unwinding apparatus and conveyed through the conveying mechanism to the cutting mechanism so as to be cut into electrode plate material strips having a plurality of continuous electrode plates, and then a separator is laminated to each electrode plate material strip, and the electrode plates (e.g., cathode electrode plates) are laminated at corresponding positions separately on the front face and the back face of the electrode plate material strip having the separator, and a battery cell is formed through "Z-folding". In the material strip feeding process, firstly, it is necessary to identify cut holes between two electrode plates on the material strip through sensors, and based on the identification result of the cut holes, deviation rectification is performed on the material strip in the feeding direction so that the cutting position on the material strip is aligned with the cutting mechanism, thus completing the cutting of the material strip. In addition, before laminating an electrode plate on the electrode plate material strip having the separator, the lamination position is determined by detecting the marker portions on the material strip (such as the creases on the electrode plate side of the material strip).

The present inventors note that in the related art, the detection of cut holes is not very accurate and prone to the problems of wrong detection and missed detection.

Based on the above considerations, the inventors propose a material strip feeding detection method for a stacking machine. In the technical solution of embodiments of the present application, a material strip image is shot by a camera apparatus, and a first marker is identified based on this material strip image so as to acquire a target deviation of the first marker. Compared with detection by sensors, through computer vision, it is possible to improve the accuracy of detection of cut holes, and then to determine the complete first electrode plate based on the first marker, to ensure that the complete material strip image is obtained, and to determine the feeding deviation based on the first marker. By using the technical solution of the present application, the accuracy of the cutting of the material strip can be improved.

The first identification can be, for example, but not limited to, a cut hole.

The material strip feeding detection method and apparatus for a stacking machine disclosed in embodiments of the present application can be applied to the production stage of stacked battery cells in the production of power batteries. Specifically, it can be applied to the production process of stacked battery cells using the continuous stacking process.

In the production of stacked battery cells, a material strip that is wound into a material roll is firstly obtained through the processes of batching, coating, rolling and slitting, etc., and then the material roll is subjected to material strip pulling by the unwinding apparatus and is conveyed to the next process. The material strip mentioned above can be an anode material strip or a cathode material strip, and the following will take the anode material strip as an example to describe the subsequent processes.

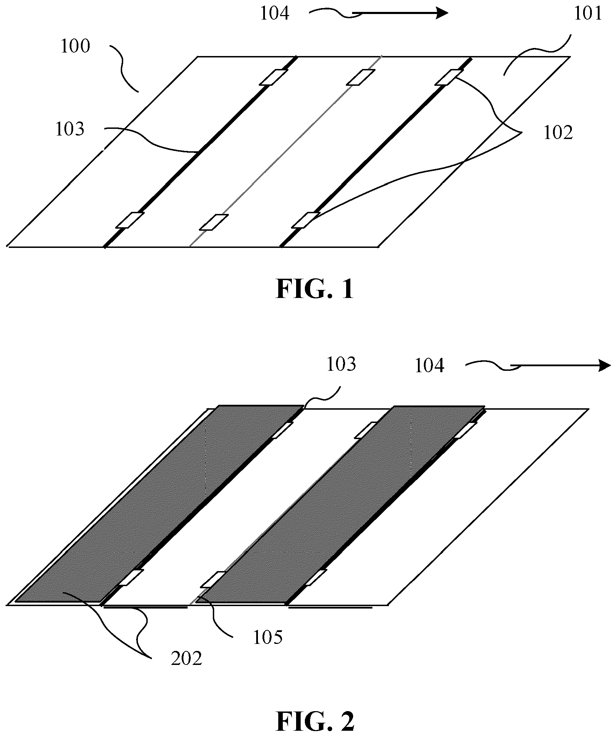

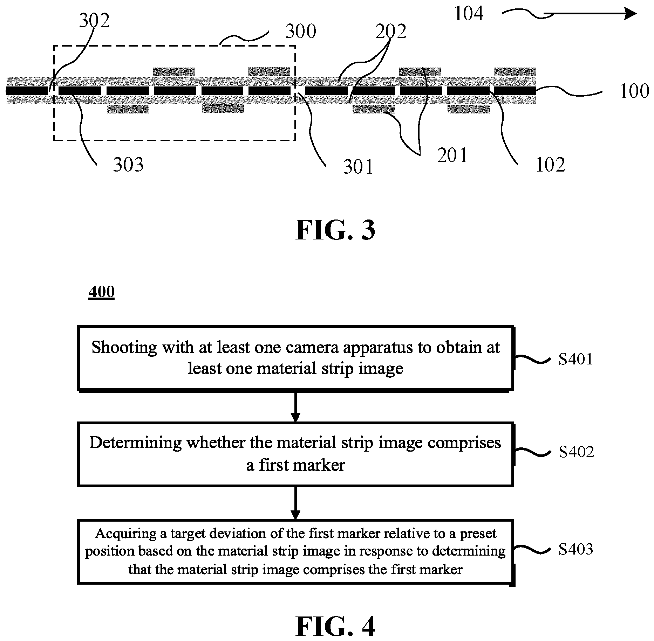

Figs. 1 and 2 illustrate the structural schematic diagrams of the material strip for the anode material strip before and after cathode electrode plates are laminated, respectively, and Fig. 3 illustrates a schematic diagram of an anode continuous stacked material strip and the distribution of electrode plates, where the separators between the anode material strip and the cathode electrode plates are not shown in Fig. 2.

Referring to Fig. 1, an anode material strip 100 is conveyed by an unwinding apparatus in a feeding direction 104. The anode material strip 100 comprises a plurality of continuous anode electrode plates 101, and between every two anode electrode plates 101, there are cut holes 102 distributed separately at positions on two opposite sides of an edge of the anode material strip 100, wherein the connection line of the cut holes 102 is perpendicular to the feeding direction 104. There is a marker portion 103 on the connection line of the cut holes 102 between two adjacent anode electrode plates 101, and there are marker portions 103 on both the front face and the back face of the anode material strip 100.

The cut hole 102 is used to indicate a complete anode electrode plate 101 on the anode material strip 100. Typically, the cut hole 102 is an elongated rectangular cut hole, and it can be understood that the cut hole 102 may also be of any other shape, which is not limited here. The cut hole 102 can be identified using a detection apparatus such as a sensor (e.g., a photosensitive sensor) or a camera apparatus, so as to acquire the position of the anode electrode plate 101 on the anode material strip 100.

The marker portion 103 is used to indicate the lamination position for the cathode electrode plate 201 on the anode material strip 100. Referring to Figs. 1 and 2, the marker portion 103 may be a crease, and the crease identification may be performed by applying visual detection techniques to identify the color difference between the marker portion and the nearby portions. The marker portions 103 are distributed at intervals on the front face or back face of the anode material strip 100, and adjacent marker portions 103 are distributed separately on the front face and back face of the anode material strip 100. Specifically, as shown in Figs. 1 and 2, in response to the marker portion 103 being identified on the front face of the anode material strip 100, one cathode electrode plate 201 is laminated in the anode electrode plate region behind this marker portion 103 (in the direction opposite to the feeding direction 104) on the front face of the anode material strip 100; and in response to the marker portion being not identified at a detection position 105 on the front face of the anode material strip 100 (i.e., the marker portion in this detection region is on the back face of the anode material strip 100), one cathode electrode plate 201 is laminated in the anode electrode plate region behind this detection position 105 (in the direction opposite to the feeding direction 104) on the back face of the anode material strip 100.

Herein, spatially relative terms such as "front", "back", etc. are applied herein for descriptive purposes to describe the relative position relationship of the anode material strip to the detection region as illustrated in the figures. It will be understood that these spatially relative terms are intended to cover different orientations of the image in use or operation in addition to the orientation depicted in the figure. For example, if the material strip in the figure is flipped, what is described as the "front" will be oriented to the "back". Similarly, the material strip can be oriented in other ways (e.g., the material strip is flipped to the direction in which the material strip plane is perpendicular to the ground or rotated in some other orientations) and the spatially relative terms used herein are explained accordingly.

In practice, referring to Fig. 3, it is also necessary to laminate separators 202 between the anode material strip and the cathode electrode plates, where the material of the separators 202 is an insulating material. The process of laminating the separators 202 precedes the process of laminating the cathode electrode plate 201 and the cutting process, and because of the poor light transmission of the separators 202, the effect of detection of the cut hole 102 and the marker portion 103 will be significantly reduced after the separators 202 are laminated, so it is necessary to detect the above two before laminating the separators and to save their relevant information in a controller (e.g., a programmable controller), so as to control the lamination of the cathode electrode plates and the cutting of the material strips based on the relevant information.

Through the unwinding apparatus, the anode material strip 100 is conveyed to the cutting mechanism where it is cut into a plurality of electrode plate material strips having continuous anode electrode plates 101; and each electrode plate material strip is then transported to a separator coating apparatus to conduct the lamination of the separator 202, and further transported through the transport mechanism to a cathode electrode plate laminating apparatus where the cathode electrode plates 201 are laminated to the front face and the back face of the anode material strip at intervals, and finally transported to another cutting mechanism where the material strip is cut into a plurality of complete battery cell material strips. A complete battery cell material strip is shown as a battery cell material strip 300 in Fig. 3. It is cut at a cutting position 301 in response to the tail plate of a previous battery cell material strip to the battery cell material strip 300 being identified; and the controller, using the information about cut holes stored therein, continues to transport the material strip forward for a predetermined distance in the feeding direction 104, so that a cutting position 302 (i.e., the end position of the tail plate 303 of the battery cell material strip 300) is aligned with a cutting knife in the cutting mechanism, so as to cut the material strip to acquire the complete battery cell material strip 300. The battery cell material strip 300 can then be folded in a "Z" shape to acquire a stacked battery cell.

In order to precisely align the cutting position of the electrode plate material strip with the cutting knife, it is necessary to perform deviation rectification of the feeding direction through the cut hole corresponding to this position. The material strip feeding detection method and apparatus for a stacking machine of the present disclosure can be applied to achieve detection of the cut hole deviation, thus reducing the problems of wrong detection and missed detection, and improving the accuracy of detection.

In order to achieve accurate detection of the cut hole deviation, the present disclosure provides a material strip feeding detection method for a stacking machine.

Referring to Fig. 4, according to some embodiments of the present disclosure, a material strip feeding detection method 400 for a stacking machine is provided, the material strip comprising a plurality of first electrode plates distributed continuously in a feeding direction, and the method 400 comprising:
Step S401: shooting with at least one camera apparatus to obtain at least one material strip image;
Step S402: determining whether the material strip image comprises a first marker; and
Step S403: acquiring a target deviation of the first marker relative to a preset position based on the material strip image in response to determining that the material strip image comprises the first marker.

In some embodiments, since conventional sensors (e.g., photosensitive sensors) cannot perform detection of the marker portion, a camera apparatus is used in the method 400 of the present disclosure to shoot the material strip so as to acquire the material strip image, and to detect the first marker based on the material strip image.

In some embodiments, the camera apparatus may be an industrial camera or a machine vision camera, and preferably, a high frame-rate plane array CCD industrial camera may be applied to acquire a clear material strip image.

In some embodiments, the material strip may be an anode material strip or a cathode material strip, and it comprises a plurality of continuous first electrode plates in the feeding direction. Taking the anode material strip as an example, each first electrode plate is an anode electrode plate.

In some embodiments, two adjacent first electrode plates are distinguished by a first marker (e.g., a cut hole).

In some embodiments, the cut hole may be detected by a conventional sensor (e.g., a photosensitive sensor), and in response to detecting a cut hole, the camera apparatus is triggered for the shooting of a material strip image. In some cases, as there may be an abnormal situation such as the cut hole not existing, the cut hole being incomplete, or the cut hole being blocked by foreign materials, etc., that causes the sensor to fail to sense the cut hole, the camera apparatus can be set to be directly triggered for shooting in response to the fact that the next shooting is still not triggered after the transport distance of the material strip exceeds the width of one electrode plate.

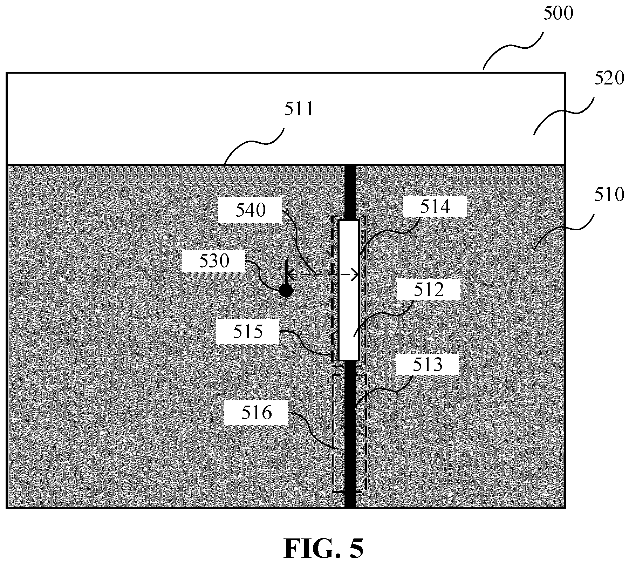

Fig. 5 illustrates a schematic diagram of a material strip image captured by a camera apparatus. A material strip image 500 shown in Fig. 5 comprises an electrode plate region 510 and a non-electrode plate region 520, wherein the electrode plate region 510 comprises an electrode plate edge 511 and a cut hole 512 (also known as the first marker). In some embodiments, an image processing algorithm can be applied to detect the cut hole 512 in the material strip image 500.

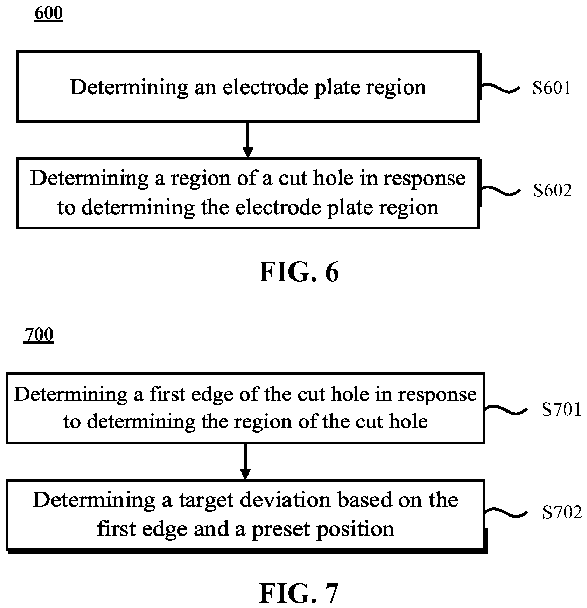

In some embodiments, as shown in Fig. 6, a method 600 for detecting a first marker in a material strip image by an image processing algorithm is given, comprising:
Step S601: determining an electrode plate region.

Referring to Fig. 5, the non-electrode plate region 520 is a region within the image region shot by the camera apparatus and outside of the electrode plate edge 511 that is not part of the electrode plate region 510, and in some cases, the non-electrode plate region 520 may be the white backlight region photographed. In such cases, the gray scale value of the non-electrode plate region 520 is stable at 255, while the gray scale value of the electrode plate region 510 is usually in the range of 40-50, so the electrode plate edge 511, and thus the electrode plate region 510, can be determined by comparing the difference in gray scale between the two regions.

In some cases, if the electrode plate region is not successfully determined by the method described above, alarm information can be sent to the control system (e.g., the programmable controller used to control the production line) so that the technician can deal with the abnormal situation in a timely manner.

Step S602: determining a region of a cut hole (i.e., the first marker) in response to determining the electrode plate region.

Referring to Fig. 5, after determining the electrode plate region 510, the extent of the region of the cut hole 512 can be further extracted by the difference in gray scale between the cut hole 512 and the electrode plate region 510. In some embodiments, the gray scale value of the cut hole 512 can be between 250-255 and the gray scale value of the electrode plate region 510 is typically between 40-50, whereby the extent of the region of the cut hole 512 can be extracted by comparing the difference in gray scale between the two regions.

In some embodiments, after extracting the extent of the region of the cut hole 512, it is necessary to further determine whether the size of the region of the cut hole 512 satisfies a preset condition, and if the preset condition is satisfied, it is judged that the cut hole exists; otherwise, it is judged that the cut hole does not exist. The preset condition may comprise, for example, at least one of the following: the pixel area of the region of the cut hole 512 being greater than or equal to a preset area threshold, or the gray scale value of the region of the cut hole 512 being greater than or equal to a preset gray scale threshold. Among other things, since the size of the cut hole varies for different models of material strips, the preset area threshold may be determined based on the detected model of the material strip. In general, the gray scale value of the cut hole 512 is between 250 and 255, so the preset gray scale threshold can be set to 240, for example, for judging whether the gray scale value of the cut hole satisfies the condition.

When the gray scale value of the cut hole is less than the preset gray scale threshold or the regional pixel area of the cut hole is less than the preset area threshold, it can be judged that there is an abnormal situation such as the cut hole not existing, the cut hole being incomplete, or the cut hole being blocked by foreign materials, etc., and alarm information can be sent to the control system (e.g., the programmable controller used to control the production line), so that the technician can deal with the abnormal situation in a timely manner.

In some embodiments, after it is determined that the detection region comprises a cut hole, a target deviation can be further calculated based on the position of the cut hole, so as to perform feeding deviation rectification of the material strip.

In some embodiments, as shown in Fig. 7, a method for calculating a target deviation from the position of the first marker (e.g., the cut hole) is given, comprising:
Step S701: determining a first edge of the cut hole in response to determining the region of the cut hole (i.e., the first marker).

Referring to Fig. 5, in some embodiments, after determining the extent of the region of the cut hole 512, a first edge 514 of the cut hole 512 can be further determined based on an edge finding algorithm by finding pixel points in the region near the first edge of the cut hole 512 that have the largest jumps in gray scale values and fitting these pixel points to a straight line by means of the least square method. It can be understood that the first edge 514 may be the one of the two long edges of the cut hole 512 that is closer to or farther from the cutting knife, which is not limited herein.

In some embodiments, after determining the extent of the region of the cut hole 512, a cut hole detection region 515 can be determined first based on the extent of the region. For example, the cut hole detection ROI (region of interest) block can be positioned in the cut hole detection region 515, and the first edge 514 of the cut hole 512 can then be determined by the edge finding algorithm. This allows for a more efficient and accurate determination of the first edge of the cut hole.

In some embodiments, if the first edge of the cut hole is not successfully determined by the method described above, alarm information can be sent to the control system (e.g., the programmable controller used to control the production line) so that the technician can deal with the abnormal situation in a timely manner.

Step S702: determining a target deviation based on the first edge and a preset position.

In some embodiments, since the relative position between the camera apparatus and the cutting knife in the cutting mechanism is fixed, the target deviation of the cut hole can be acquired from the material strip image by calculating the deviation distance of the cut hole relative to the camera apparatus. In some examples, by determining a preset position in the material strip image and by using the image coordinates of the preset position and the first edge position, the distance between the first edge of the cut hole and the preset position in the feeding direction of the material strip, i.e., the target deviation, can be acquired. It can be understood that the preset position may be any position in the material strip image that is determined by the technician, which is not limited here.

In some examples, referring to Fig. 5, the preset position may be an image center point 530 of the material strip image and the target deviation 540 is the distance between the image center point 530 and the first edge 514 of the cut hole 512.

In some embodiments, the method described above can be implemented by applying a visual detection software built in a CCD visual detection system.

The target deviation obtained based on the method described above can be stored in the control system (e.g., the programmable controller) that controls the stacked battery cell production line, so that it is possible to control the cutting position of the material strip based on the target deviation to be precisely aligned with the cutting knife, thereby completing the cutting of the material strip.

The target deviation of the first marker is acquired by shooting a material strip image with a camera apparatus and identifying the first marker based on this material strip image. Compared with detection by sensors, through computer vision, it is possible to improve the detection accuracy of cut holes, and then to determine the complete first electrode plate based on the first marker, to ensure that the complete material strip image is obtained, and to determine the feeding based on the first marker. By using the technical solution of the present application, the accuracy of the cutting of the material strip can be improved.

In some embodiments, the material strip image at least comprises a detection region between two adjacent first electrode plates. Referring to Fig. 5, the detection region may be, for example, the electrode plate region 510. Thus, the efficiency of detection is further improved by first determining a detection region in the material strip image, and then determining whether the detection region contains a first marker and a second marker.

According to some embodiments of the present application, wherein the first marker is a through hole disposed in the detection region, and the material strip feeding detection method for a stacking machine further comprises: before shooting with the at least one camera apparatus, turning on a front light source, light emitted from the front light source being projected onto the front face of the detection region, and/or turning on a back light source, light emitted from the back light source being projected onto the back face of the detection region; and determining whether the material strip image comprises a second marker, the second marker being a preset pattern formed on the front face of the detection region.

Under natural light, there are cases where the first marker (e.g., a cut hole) and the second marker (e.g., a crease) are poorly imaged, for example, in the captured material strip image, between the electrode plate region, the non-electrode plate region, the first marker, and the second marker, the differences in gray scale are small and the boundaries are not clear. Therefore, in order to avoid such a situation, the detection region on the material strip needs to be illuminated by a set of front and back light sources.

In some examples, the cut hole may be a through hole, and in some other examples, the cut hole may also be a blind hole.

In some embodiments, the front light source is used to illuminate the frontal region of the detection region, thereby enhancing the imaging effect of the second marker.

In some embodiments, the back light source is placed on the back face of the detection region to illuminate the cut hole region and the non-electrode plate region by projecting light on the back face of the detection region, thereby enabling boundaries between the electrode plate region, the non-electrode plate region, and the cut hole region to be clearer.

In some embodiments, the material strip image has clear first marker and second marker images at the same time, wherein the second marker may be a marker portion (e.g., a crease) with a preset shape that is formed at the first marker to indicate the lamination position for a second electrode plate (i.e., an electrode plate to be laminated that is of an opposite polarity to the first electrode plate) on the material strip.

In some embodiments, it is possible to further determine whether the material strip image comprises the second marker on the basis of the determination of the cut hole (i.e., the first marker) by the method described above. The specific method comprises: determining a marker portion (i.e., the second marker) detection region based on the region of the cut hole, and judging whether the detection region comprises the marker portion ( i.e., the second marker).

Generally, the relative position of the marker portion and the cut hole is fixed. For example, referring to Fig. 5, the marker portion 513 is on the same straight line as the cut hole 512, so that the detection region for the marker portion can be determined in the case where the extent of the region of the cut hole 512 has been determined.

In some embodiments, the marker portion detection region 516 can be determined based on the extent of the region of the cut hole 512, for example, the marker portion detection ROI (region of interest) block can be positioned in the marker portion detection region 516, and the difference in gray scale between the marker portion 512 and the electrode plate region 510 (e.g., the gray scale of the marker portion 512 is typically 20-25 and the gray scale of the electrode plate region 510 is typically 40-50) can be used to extract the region of the marker portion 512 and calculate the pixel area of the marker portion region, and it is judged whether the marker portion exists by judging whether the pixel area is greater than a certain preset pixel area.

In some examples, the preset pixel area may be 2000 pixels, and when the pixel area of the marker portion region is greater than 2000, it is judged that this detection region comprises the marker portion, that is, here the electrode plate to be laminated should be laminated on the face where the detection region is located; otherwise, it is judged that the detection region does not comprise the marker portion, that is, here the electrode plate to be laminated should be laminated on the back face for the face where the detection region is located.

Thus, by arranging the front light source and the back light source at the same time, it is possible to enable the camera apparatus to capture a material strip image containing both the first marker and the second marker, thereby realizing the simultaneous detection of the second marker and the first mark; at the same time, it is possible to further improve the image clarity of the first marker in the material strip image, thus enhancing the accuracy of detection of the first marker.

According to some embodiments of the present application, the first marker comprises a first cut hole and a second cut hole, and the first cut hole and the second cut hole are located on two opposite sides of the material strip in a direction perpendicular to the feeding direction; and the detection region comprises a first detection region and a second detection region located between the two adjacent first electrode plates, the first cut hole being located in the first detection region and the second cut hole being located in the second detection region; and the at least one camera apparatus comprises a first camera apparatus and a second camera apparatus, and the material strip image comprises a first detection image obtained by shooting the front face of the first detection region using the first camera apparatus and a second detection image obtained by shooting the front face of the second detection region using the second camera apparatus, wherein acquiring a target deviation of the first marker relative to a preset position based on the material strip image comprises: acquiring the target deviation based on the first detection image and/or the second detection image in response to determining that the first detection region and the second detection region comprise the first marker.

In some embodiments, the two opposite sides of the material strip in the direction perpendicular to the feeding direction may each be provided with one camera apparatus to detect the cut hole and the marker portion in the opposite detection regions at the two sides of the material strip, respectively.

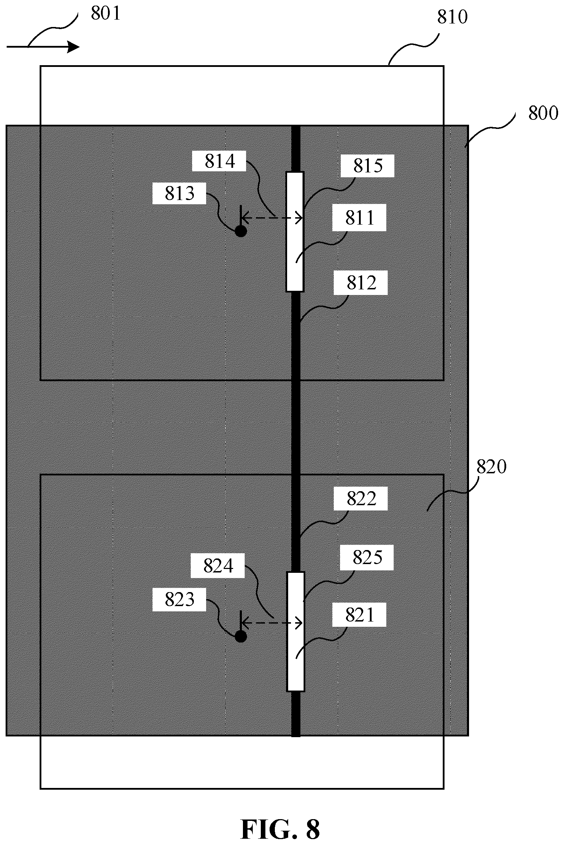

Fig. 8 illustrates a schematic diagram of the opposite detection regions at the two sides of the material strip. Referring to Fig. 8, the material strip 800 is conveyed in the feeding direction 801. The first detection image 810 and the second detection image 820 can be taken by the first camera apparatus and the second camera apparatus for the first detection region and the second detection region, respectively. Among them, the first detection region comprises a first cut hole 811 and a first marker portion 812 near one of the edges of the material strip 800, and the second detection region comprises a second cut hole 821 and a second marker portion 822 near the other edge of the material strip 800.

In some embodiments, the detections of the first cut hole 811 and the second cut hole 821 can be performed for the first detection image 810 and the second detection image 820, respectively, based on the cut hole detection method described above, so as to acquire the corresponding detection results.

In some embodiments, when it is judged that both the first cut hole and the second cut hole exist, the target deviation can be calculated by the above deviation calculation method based on the first cut hole in the first detection image or the second cut hole in the second detection image.

In some embodiments, when it is judged that both the first cut hole and the second cut hole exist, the target deviation can be calculated by the above deviation calculation method based on the first cut hole in the first detection image and the second cut hole in the second detection image. In one example, the corresponding first deviation and second deviation can be calculated separately, and the average of the two deviations can be calculated to determine the target deviation.

Thus, by disposing the first camera apparatus and the second camera apparatus on the two sides of the material strip in the feeding direction, respectively, the first detection image and the second detection image are captured respectively for opposite positions on the two sides of the material strip in the feeding direction, thus making it possible to analyze the two detection images at the same time and acquire the target deviation, which improves the accuracy of calculation of the deviation.

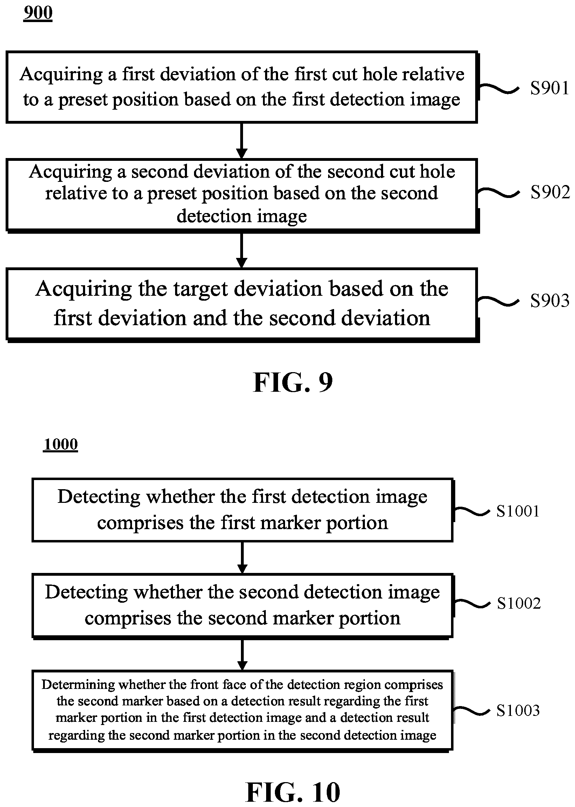

According to some embodiments of the present application, as shown in Fig. 9, acquiring the target deviation based on the first detection image and/or the second detection image may comprise:
Step S901: acquiring a first deviation of the first cut hole relative to a preset position based on the first detection image;
Step S902: acquiring a second deviation of the second cut hole relative to a preset position based on the second detection image; and
Step S903: acquiring the target deviation based on the first deviation and the second deviation.

Referring to Fig. 8, the first cut hole edge 815 of the first cut hole 811 can be acquired based on the above deviation calculation method, and the first deviation can be determined based on the distance between the first cut hole edge 815 and the preset position in the feeding direction. Similarly, the second cut hole edge 825 can be acquired based on the second cut hole 821, and the second deviation can then be determined based on the distance between the second cut hole edge 825 and the preset position in the feeding direction. It can be understood that the preset position may be any position in the detection image that is determined by the technician, which is not limited here.

In some embodiments, the first preset position 813 corresponding to the first cut hole edge 815 may be the image center of the first detection image 810, and the first deviation 814 is the distance between the first preset position 813 and the first cut hole edge 815.

In some embodiments, the second preset position 823 corresponding to the second cut hole edge 825 may be the image center of the second detection image 820, and the second deviation 824 is the distance between the second preset position 823 and the second cut hole edge 825.

In some embodiments, the above preset positions may also be the same position, for example, they may correspond to the connection line between the optical center of the first camera apparatus and the optical center of the second camera apparatus.

In some embodiments, the first deviation or the second deviation may be selected as the target deviation for use in performing the feeding deviation rectification of the material strip.

In some embodiments, the target deviation can also be determined by calculating the average of the first deviation and the second deviation for use in feeding deviation rectification of the material strip.

Thus, by disposing the first camera apparatus and the second camera apparatus on the two sides of the material strip in the feeding direction, respectively, the first detection image and the second detection image are captured respectively for opposite positions on the two sides of the material strip in the feeding direction, thus making it possible to acquire the deviations of two cut holes at the opposite positions on the material strip based on the two detection images, respectively, and calibrate the deviation calculation results to acquire the target deviation, which improves the accuracy of calculation of the target deviation.

According to some embodiments of the present application, acquiring the target deviation based on the first deviation and the second deviation comprises: acquiring the target deviation based on the first deviation and the second deviation in response to an absolute value of a difference between the first deviation and the second deviation being not greater than a preset threshold.

In some embodiments, mutual verification of the detection results can be performed based on the first detection image and the second detection image. Specifically, after obtaining the first deviation and the second deviation separately based on the method described above, the difference between them can be calculated. When the absolute value of the difference is not greater than a preset threshold (which may be, for example, an offset that exists in the mounting of the two camera apparatuses), the two deviation detection results can be judged to be substantially consistent, and then the target deviation can be calculated based on the first deviation and the second deviation by the method described above.

During the process of calibration, when the error between the first deviation and the second deviation acquired through the two detection images, respectively, is within the preset range, the target deviation can be acquired based on the first deviation and the second deviation (e.g., by averaging the first deviation and the second deviation), thereby improving the accuracy of calculation of the deviation.

According to some embodiments of the present application, the material strip feeding detection method for a stacking machine further comprises: outputting alert information in response to an absolute value of a difference between the first deviation and the second deviation being greater than a preset threshold.

In some embodiments, when the absolute value of the difference between the first deviation and the second deviation is greater than a preset threshold (which may be, for example, the offset that exists in the mounting of the two camera apparatuses), the two deviation detection results may be judged to be inconsistent. This situation may mean that there is a problem with the device or the material strip, so alarm information can be sent to the control system (e.g., the programmable controller used to control the production line) so that the technician can deal with the abnormal situation in a timely manner.

During the process of calibration, when the error between the first deviation and the second deviation acquired through the two detection images, respectively, exceeds the preset range, alarm information is immediately sent, thereby enabling timely alarm for adjustment when there is an obvious error in the deviation results acquired through the two camera apparatuses, thus improving the speed of problem discovery and the efficiency of information feedback.

According to some embodiments of the present application, the material strip feeding detection method for a stacking machine further comprises: outputting alert information in response to determining that at least one of the first detection region and the second detection region does not comprise the first marker (e.g., the cut hole).

In some embodiments, when at least one of the first cut hole and the second cut hole is judged not to exist (e.g., by determining that the pixel area of the cut hole is less than a preset area threshold and/or the gray scale value of the cut hole is less than a preset gray scale threshold), it can be judged that an abnormal situation, such as the cut hole not existing, the cut hole being incomplete or the cut hole being blocked by foreign materials, exists in at least one of the first cut hole and the second cut hole. The alarm information can be sent to the control system (e.g., the programmable controller used to control the production line) so that the technician can deal with the abnormal situation in a timely manner.

The alarm information is sent when cut holes in the two images are not detected at the same time in the two detection images, so that the problematic electrode plate material strip can be handled in a timely manner, which improves the speed of discovering the problematic material strip and the efficiency of information feedback.

According to some embodiments of the present application, the detection region comprises a first detection region and a second detection region located between the two adjacent first electrode plates, and the second marker comprises a first marker portion located in the first detection region and a second marker portion located in the second detection region, wherein, as shown in Fig. 10, determining whether the material strip image comprises the second marker may comprise:
Step S1001: detecting whether the first detection image comprises the first marker portion;
Step S1002: detecting whether the second detection image comprises the second marker portion; and
Step S1003: determining whether the front face of the detection region comprises the second marker based on a detection result regarding the first marker portion in the first detection image and a detection result regarding the second marker portion in the second detection image.

In some embodiments, referring to Fig. 8, the detections of the first marker portion 812 and the second marker portion 822 can be performed for the first detection region 810 and the second detection region 820, respectively, based on the detection method for a marker portion described above, so as to acquire the corresponding marker portion detection results.

In some embodiments, mutual verification of the detection results can be performed by comparing the detection results of the first marker portion 812 and the second marker portion 822 so as to acquire the final marker portion detection result.

Thus, by disposing the first camera apparatus and the second camera apparatus on the two sides of the material strip in the feeding direction, the first detection image and the second detection image are captured respectively for opposite positions on the two sides of the material strip in the feeding direction, thus making it possible to acquire the marker portion detection results respectively for the opposite positions on the two sides of the material strip based on the two detection images, so as to acquire the final marker portion detection result, which improves the accuracy of the marker portion detection result.

According to some embodiments of the present application, determining whether the front face of the detection region comprises the second marker comprises: determining that the front face of the detection region comprises the second marker in response to determining that the first detection image comprises the first marker portion and the second detection image comprises the second marker portion.

Thus, it is possible to acquire the marker portion detection results for the opposite positions on the two sides of the material strip based on the two detection images, respectively, and to perform mutual verification of the detection results by comparing the two detection results, so as to acquire the final marker portion detection result and judge the lamination position for laminating an electrode plate, thereby improving the accuracy of the detection results and judgment of the lamination position.

According to some embodiments of the present application, the material strip feeding detection method for a stacking machine further comprises: outputting alert information in response to determining that one of the first detection image and the second detection image does not comprise the second marker.

In some embodiments, when the detection results of the first marker portion and the second marker portion are inconsistent, it is judged that there may be a problem with the device or the material strip, so alarm information can be sent to the control system (e.g., the programmable controller used to control the production line) so that the technician can deal with the abnormal situation in a timely manner.

Thus, it is possible to acquire the marker portion detection results for the opposite positions on the two sides of the material strip based on the two detection images, respectively, and to perform mutual verification of the detection results by comparing the two detection results, so that when the two detection results are inconsistent, an alarm can be triggered in time to make adjustments, thereby improving the speed of problem discovery and the efficiency of information feedback.

According to some embodiments of the present application, the material strip feeding detection method for a stacking machine further comprises: determining that the back face of the detection region comprises the second marker in response to determining that neither of the first detection image and the second detection image comprises the second marker.

In some embodiments, when the detection results of the first marker portion and the second marker portion are the same (i.e., the two detection regions both comprise the marker portion or neither of them comprises the marker portion), it is judged that the above detection results pass the verification and can be used to indicate the lamination position for laminating an electrode plate.

In some embodiments, since the electrode plate to be laminated needs to be laminated at the corresponding position of the material strip after the separator is laminated, the above information about the position of the marker portion and the lamination position for the electrode plate can be stored in the control system first to indicate the position for subsequent lamination of the electrode.

Thus, it is possible to realize the detection of the marker portion on the front face and the back face of the electrode plate material strip at the same time by simply disposing a camera apparatus on the front face of the electrode plate material strip without the need for disposing a camera apparatus on the back face, thereby simplifying the structure of the device and reducing the cost of the device.

According to some embodiments of the present application, the at least one camera apparatus comprises two sets of camera apparatuses, the two sets of camera apparatuses being disposed at an interval of a preset distance, and shooting the detection region between the two adjacent first electrode plates using the at least one camera apparatus comprises: shooting the front face of the detection region between the two adjacent first electrode plates using one set of the two sets of camera apparatuses; and shooting the back face of the detection region between the two adjacent first electrode plates using the other set of the two sets of camera apparatuses.

In some embodiments, this can be achieved by further adding a set of camera apparatuses for shooting the back face of the electrode plate material strip. The set of camera apparatuses for shooting the back face of the material strip can be arranged separately on two opposite sides of the material strip in the direction perpendicular to the feeding direction, so that it is possible to separately detect the marker portions in opposite detection regions at the two sides of the back face of the material strip.

In some embodiments, the camera apparatus for shooting the front face of the material strip and the camera apparatus for shooting the back face of the material strip can be arranged at an interval of a preset distance, so that the two sets of front and back light sources for illuminating the front face and the back face of the material strip do not interfere with each other, thus ensuring the imaging quality of the detection image.

By disposing two sets of camera apparatuses at intervals on the front face and the back face of the material strip, respectively, it is possible to realize the function of simultaneous detection of the marker portion on the front face and the back face of the material strip, thus further improving the accuracy of the marker portion detection results and the judgment of the lamination position.

According to some embodiments of the present application, the target deviation comprises a deviation of the first marker relative to the preset position in the feeding direction.

Thus, by determining a preset position that is fixed relative to the cutting mechanism, based on the distance between this preset position and the cut hole on the material strip, the deviation of the material strip relative to the cutting mechanism can be accurately and conveniently calculated.

According to some embodiments of the present application, the position of the at least one camera apparatus is fixed, and the preset position is an optical center of the corresponding camera apparatus.

The optical center of the camera apparatus is also the center point of the lens of the camera apparatus, which corresponds to the image center point in the material strip image.

In some embodiments, referring to Fig. 5, the distance between the image center point 530 of the material strip image and the first edge 514 of the cut hole 512 can be calculated, and the distance between the cut hole 512 and the optical center of the camera apparatus in the real world can be acquired according to the proportional relationship between the image coordinate system and the real world coordinate system and is used as the target deviation.

The position of the camera apparatus is fixed, i.e., the relative distance between the camera apparatus and the cutting mechanism is fixed, which makes it possible to calculate the deviation of the material strip by simply acquiring the relative distance of the cut hole to the optical center of the camera apparatus, thus saving resources for calculating the deviation of the material strip and improving the efficiency of calculating the deviation of the material strip.

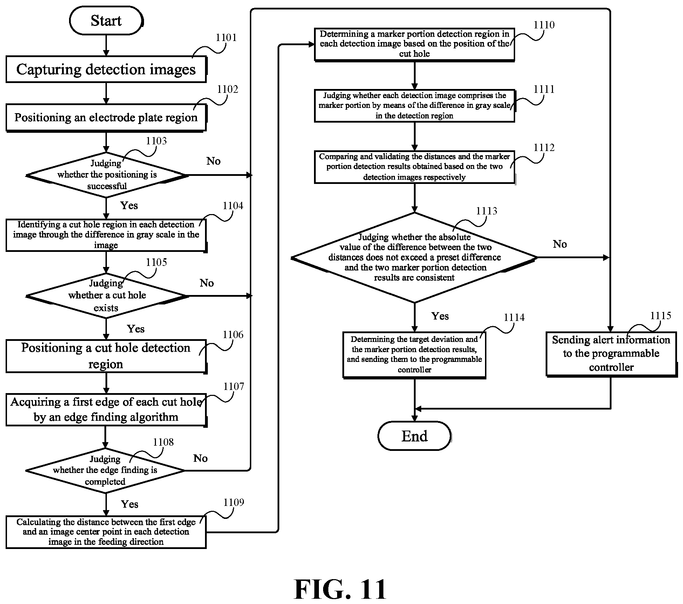

According to some embodiments of the present application, referring to Fig. 11, the material strip feeding detection method for a stacking machine may comprise:
Step S1101: capturing detection images of the detection regions at two opposite sides of the material strip in a direction perpendicular to the feeding direction by means of two CCD industrial cameras, respectively, wherein each detection image comprises a cut hole and a marker portion at two opposite sides of the material strip;
Step S1102: positioning an electrode plate region by means of a difference in gray scale between the electrode plate region and a non-electrode plate region;
Step S1103: judging whether the electrode plate region is successfully positioned, and if the positioning is successful, executing step S1104; or if the positioning is not successful, executing step S1115;
Step S1104: identifying a cut hole region in each detection image through the difference in gray scale in the image;
Step S1105: judging whether a cut hole exists by means of the pixel area of the cut hole region, and if the cut hole exists, executing step S1106; or if the cut hole does not exist, executing step S1115;
Step S 1106: positioning a cut hole detection region based on the position of the cut hole region;
Step S1107: acquiring a first edge of each cut hole by an edge finding algorithm, wherein the first edge is the long edge of the cut hole that is closer to the cutting knife;
Step S1108: judging whether the edge finding is completed, and if the edge finding is completed, executing step S1109; or if the edge finding is not completed, executing step S1115;
Step S1109: calculating the distance between the first edge and an image center point in each detection image in the feeding direction;
Step S1110: determining a detection region for a marker portion in each detection image based on the position of the cut hole;
Step S1111: judging whether each detection image comprises the marker portion by means of the difference in gray scale in the detection region;
Step S1112: comparing and validating the distances and the marker portion detection results obtained based on the two detection images respectively;
Step S1113: judging whether the absolute value of the difference between the two distances does not exceed a preset difference and the two marker portion detection results are consistent, and if the absolute value of the difference between the two distances does not exceed the preset difference and the two marker portion detection results are consistent, executing step S1114; or if the absolute value of the difference between the two distances exceeds the preset difference or the two marker portion detection results are inconsistent, executing step S1115;
Step S1 114: averaging the two distances to determine the target deviation, and sending the target deviation and the marker portion detection results to the programmable controller; and
Step S1115: sending alert information to the programmable controller.

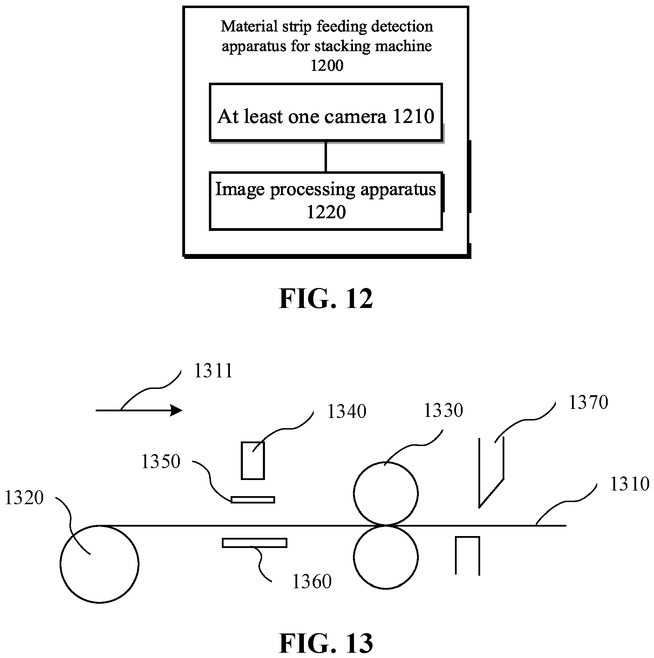

According to some embodiments of the present application, as shown in Fig. 12, a material strip feeding detection apparatus 1200 for a stacking machine is provided, wherein the material strip comprises a plurality of first electrode plates distributed continuously in a feeding direction, and the apparatus 1200 comprises: at least one camera apparatus 1210 configured to shoot the material strip to obtain at least one material strip image; and an image processing apparatus 1220 configured to determine whether the material strip image comprises a first marker, and determine a target deviation of the first marker relative to a preset position based on the material strip image in response to determining that the material strip image comprises the first marker.

The operations of the apparatuses 1210-1220 in the material strip feeding detection apparatus 1200 for a stacking machine are similar to the operations of steps S401-S403 in the method 400 described above and will not be repeated herein.

According to some embodiments of the present application, the image processing apparatus may comprise: a first determination unit configured to determine whether the material strip image comprises the first marker; and an acquisition unit configured to acquire a target deviation of the first marker relative to a preset position based on the material strip image in response to determining that the material strip image comprises the first marker.

According to some embodiments of the present application, the target deviation comprises a deviation of the first marker relative to the preset position in the feeding direction.

According to some embodiments of the present application, the material strip image at least comprises a detection region between two adjacent first electrode plates.

According to some embodiments of the present application, the first marker is a through hole disposed in the detection region, and the material strip feeding detection apparatus for a stacking machine further comprises: a front light source and a back light source; and a first controller configured to, before shooting with the at least one camera apparatus, turn on the front light source, light emitted from the front light source being projected onto the front face of the detection region, and/or turn on the back light source, light emitted from the back light source being projected onto the back face of the detection region; and the first determination unit is further configured to determine whether the material strip image comprises a second marker, the second marker being a preset pattern formed on the front face of the detection region.

Fig. 13 illustrates a structural schematic diagram of a material strip feeding detection apparatus according to some embodiments of the present disclosure.

In some embodiments, referring to Fig. 13, a material strip 1310 is transported in a feeding direction 1311 to a cutting mechanism 1370 through an unwinding apparatus 1320 and a transport apparatus 1330. During the transport process, at least one camera apparatus 1340 may shoot a detection region on the material strip 1310 to acquire a material strip image, so as to perform deviation rectification of the material strip 1310 based on the material strip image, and judge a lamination position for laminating an electrode plate by judging whether the detection region in the material strip image comprises the marker portion. A front light source 1350 and a back light source 1360 are arranged on the front face and the back face of the detection region on the material strip 1310, respectively. Among them, the front light source 1350 is used to illuminate the frontal region of the detection region, thereby enhancing the imaging effect of the marker portion. The back light source 1360 is placed on the back face of the detection region to illuminate the cut hole region and the non-electrode plate region by projecting light on the back face of the detection region, thereby enabling boundaries between the electrode plate region, the non-electrode plate region, and the cut hole region to be clearer.

In some embodiments, the camera apparatus 1340 may be an industrial camera or a machine vision camera, and preferably, a high frame-rate plane array CCD industrial camera may be applied to acquire a clear material strip image.

In some embodiments, the aforementioned unwinding apparatus 1320, transport apparatus 1330, and cutting mechanism 1370 may be controlled by a control system such as a programmable controller.

In some embodiments, the at least one camera apparatus 1340, the front light source 1350, and the back light source 1360 may be controlled by a first controller different from the control system described above, so as to perform operations such as shooting, turning on or off the light source, and so on. The first controller may be, for example, a control unit in a CCD visual detection system.

In some embodiments, at least one sensor (e.g., photosensitive sensor) may further be disposed at the edge of the material strip 1310 for use in sensing the cut hole on the material strip 1310. When the sensor senses the cut hole, it sends a signal to the first controller, and upon receiving the signal, the first controller can control the camera apparatus to take a picture to acquire a material strip image at the cut hole.

In some embodiments, the first controller can also be the above-mentioned control system, so that it is possible to control the material strip feeding detection apparatus by the same control system, thus saving the communication time and communication resources between systems and improving the control efficiency.

Thus, by arranging the front light source and the back light source at the same time, it is possible to enable the camera apparatus to capture a material strip image containing both the first marker and the second marker, thereby realizing the simultaneous detection of the second marker and the first mark; at the same time, it is possible to further improve the image clarity of the first marker in the material strip image, thus enhancing the accuracy of detection of the first marker.

According to some embodiments of the present application, the first marker comprises a first cut hole and a second cut hole, and the first cut hole and the second cut hole are located on two opposite sides of the material strip in a direction perpendicular to the feeding direction; and the detection region comprises a first detection region and a second detection region located between the two adjacent first electrode plates, the first cut hole being located in the first detection region and the second cut hole being located in the second detection region; and the at least one camera apparatus comprises a first camera apparatus and a second camera apparatus, and the material strip image comprises a first detection image obtained by shooting the front face of the first detection region using the first camera apparatus and a second detection image obtained by shooting the front face of the second detection region using the second camera apparatus, wherein the acquisition unit is configured to: acquire the target deviation based on the first detection image and/or the second detection image in response to determining that the first detection region and the second detection region comprise the first marker.

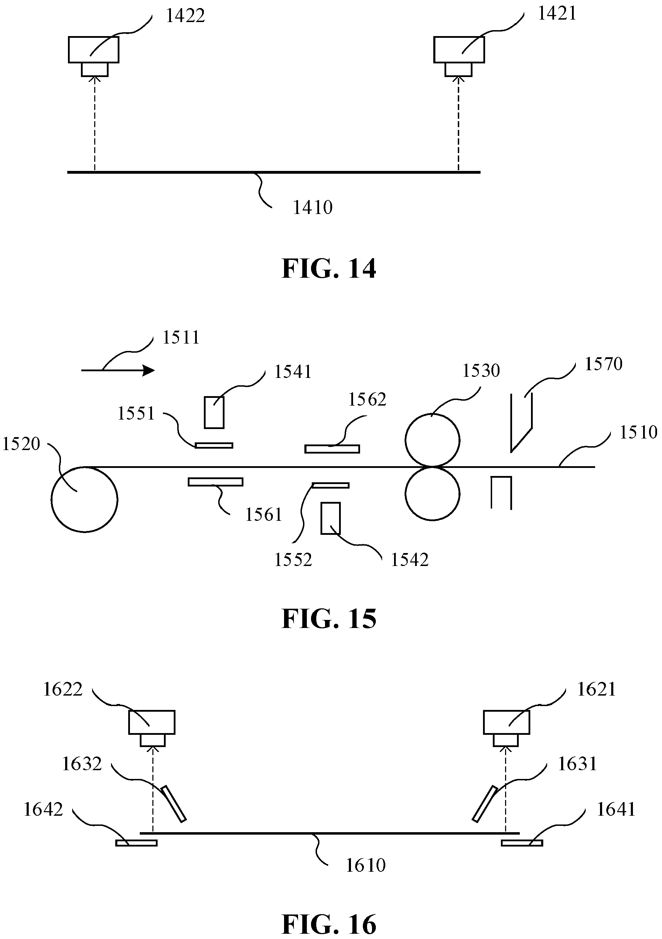

Fig. 14 illustrates a structural schematic diagram of a material strip feeding detection apparatus along the feeding direction of the material strip, wherein the material strip 1410 is a cross section perpendicular to the feeding direction. In some embodiments, referring to Fig. 14, the two opposite sides of the material strip 1410 in a direction perpendicular to the feeding direction may each be provided with one camera apparatus, i.e., a first camera apparatus 1421 and a second camera apparatus 1422, to detect the cut hole and the marker portion in the opposite detection regions at the two sides of the material strip 1410, respectively.

In some embodiments, for the opposite detection regions at the two sides of the material strip 1410, one front light source and one back light source can be applied above and below the material strip 1410, respectively.

Thus, by disposing the first camera apparatus and the second camera apparatus on the two sides of the material strip in the feeding direction, respectively, the first detection image and the second detection image are captured respectively for opposite positions on the two sides of the material strip in the feeding direction, thus making it possible to analyze the two detection images at the same time and acquire the target deviation, which improves the accuracy of calculation of the deviation.

According to some embodiments of the present application, the acquisition unit is configured to: acquire a first deviation of the first cut hole relative to a preset position based on the first detection image; acquire a second deviation of the second cut hole relative to a preset position based on the second detection image; and acquire the target deviation based on the first deviation and the second deviation.

According to some embodiments of the present application, the acquisition unit is further configured to: acquire the target deviation based on the first deviation and the second deviation in response to an absolute value of a difference between the first deviation and the second deviation being not greater than a preset threshold.

According to some embodiments of the present application, the material strip feeding detection apparatus for a stacking machine further comprises: a first output unit, wherein the first controller is further configured to control the first output unit to output alert information in response to an absolute value of a difference between the first deviation and the second deviation being greater than a preset threshold.

According to some embodiments of the present application, the first controller is further configured to: control the first output unit to output the alert information in response to determining that at least one of the first detection region and the second detection region does not comprise the first marker.

According to some embodiments of the present application, the detection region comprises a first detection region and a second detection region located between the two adjacent first electrode plates, and the second marker comprises a first marker portion located in the first detection region and a second marker portion located in the second detection region, wherein the first determination unit is configured to: detect whether the first detection image comprises the first marker portion; detect whether the second detection image comprises the second marker portion; and determine whether the front face of the detection region comprises the second marker based on a detection result regarding the first marker portion in the first detection image and a detection result regarding the second marker portion in the second detection image.

According to some embodiments of the present application, the first determination unit is configured to: determine that the front face of the detection region comprises the second marker in response to determining that the first detection image comprises the first marker portion and the second detection image comprises the second marker portion.

According to some embodiments of the present application, the material strip feeding detection apparatus for a stacking machine further comprises: a second output unit, wherein the first controller is further configured to control the second output unit to output alert information in response to determining that one of the first detection image and the second detection image does not comprise the second marker.

According to some embodiments of the present application, the material strip feeding detection apparatus for a stacking machine further comprises: a second determination unit configured to determine that the back face of the detection region comprises the marker portion in response to determining that neither of the first detection image and the second detection image comprises the second marker.

According to some embodiments of the present application, the at least one camera apparatus comprises two sets of camera apparatuses, the two sets of camera apparatuses being disposed at an interval of a preset distance, and one set of the two sets of camera apparatuses being configured to shoot the front face of the detection region between the two adjacent first electrode plates; and the other set of the two sets of camera apparatuses being configured to shoot the back face of the detection region between the two adjacent first electrode plates.

Fig. 15 illustrates a structural schematic diagram of a material strip feeding detection apparatus according to some embodiments of the present disclosure.

In some embodiments, referring to Fig. 15, a material strip 1510 is transported in a feeding direction 1511 to a cutting mechanism 1570 through an unwinding apparatus 1520 and a transport apparatus 1530. During the transport process, a set of camera apparatuses 1541 and a set of camera apparatuses 1542 may be disposed for shooting the detection regions on the front face and the back face of the material strip 1510, respectively. Each set of camera apparatuses may each comprise a first camera apparatus and a second camera apparatus for use in shooting the two opposite sides of the material strip 1510 perpendicular to the feeding direction, respectively.

In some embodiments, two sets of front and back light sources may be separately disposed accordingly. As shown in Fig. 15, a front light source 1551 and a back light source 1561 are used for illuminating the detection region on the front face of the material strip 1510, and a front light source 1552 and a back light source 1562 are used for illuminating the detection region on the back face of the material strip 1510.

In some embodiments, the two sets of camera apparatuses can be arranged at an interval of a preset distance, for example, arranged at an interval of the distance of one or more first electrode plates, so that the two sets of front and back light sources used to illuminate the front face and the back face of the material strip will not interfere with each other, thus ensuring the imaging quality of the material strip image.

By disposing two sets of camera apparatuses at intervals on the front face and the back face of the material strip, respectively, it is possible to realize the function of simultaneous detection of the marker portion on the front face and the back face of the material strip, thus further improving the accuracy of the marker portion detection results and the judgment of the lamination position.

According to some embodiments of the present application, the position of the at least one camera apparatus is fixed, and the preset position is an optical center of the camera apparatus.

In some embodiments, referring to Fig. 13, the distance between the camera apparatus 1340 and the cutting mechanism 1370 is fixed. The distance between the image center point of the material strip image and the first edge of the cut hole can be calculated, and the distance between the cut hole on the material strip and the optical center of the camera apparatus 1340 in the real world can be acquired according to the proportional relationship between the image coordinate system and the real world coordinate system and is used as the target deviation; and the distance from the cut hole to the cutting mechanism 1370 is calculated based on this target deviation and the distance between the camera apparatus 1340 and the cutting mechanism 1370, and based on this distance, the material strip 1310 is controlled to move toward the cutting mechanism, thereby realizing the feeding deviation rectification.

The position of the camera apparatus is fixed, i.e., the relative distance between the camera apparatus and the cutting mechanism is fixed, which makes it possible to calculate the deviation of the material strip from the relative distance of the cut hole in the image to the optical center of the camera apparatus without complicated operations such as calibration of the camera, thus saving resources for calculating the deviation of the material strip and improving the efficiency of calculating the deviation of the material strip.

According to some embodiments of the present application, the front light source comprises a first front light source and a second front light source, and the first front light source and the second front light source are arranged on two opposite sides of the material strip in the direction perpendicular to the feeding direction, respectively, light emitted from the first front light source being projected onto the front face of the first detection region, and light emitted from the second front light source being projected onto the front face of the second detection region.

Fig. 16 illustrates a structural schematic diagram of a material strip feeding detection apparatus along the feeding direction of the material strip, wherein the material strip 1610 is a cross section perpendicular to the feeding direction. In some embodiments, referring to Fig. 16, the two opposite sides of the material strip 1610 in a direction perpendicular to the feeding direction may each be provided with one camera apparatus, i.e., a first camera apparatus 1621 and a second camera apparatus 1622, to detect the cut hole and the marker portion in the opposite detection regions at the two sides of the material strip 1610, respectively.

In some embodiments, referring to Fig. 16, the front light source may comprise a first front light source 1631 and a second front light source 1632, and the first front light source 1631 and the second front light source 1632 may be arranged on two opposite sides of the material strip 1610 in the direction perpendicular to the feeding direction, respectively, light emitted from the first front light source 1631 being projected onto the front face of the first detection region, and light emitted from the second front light source 1632 being projected onto the front face of the second detection region.

In some embodiments, the first front light source 1631 and the second front light source 1632 may be strip-shaped light sources, so the shape of the strip-shaped light source can better adapt to the shape of the material strip, thereby ensuring better lighting effect while further saving energy.

In some embodiments, the first front light source 1631 and the second front light source 1632 may be white light sources, and through illumination by the white light sources, it is possible to further enhance the imaging effect and stability of the marker portion.

By disposing a set of front light sources to separately light the opposite positions on the two sides of the material strip, the marker portion captured by the two camera apparatuses can be made clearer, thus enhancing the identification effect; at the same time, compared with providing one front light source to illuminate the whole material strip, providing a set of front light sources makes it possible to adapt to different widths of the material strip, thus saving more energy.

According to some embodiments of the present application, referring to Fig. 16, the front light source (which, for example, may comprise the first front light source 1631 and the second front light source 1632) is arranged such that an included angle between the light emitted from the front light source and a plane in which the material strip is located is 45°-75°.

By disposing the front light source at a suitable lighting angle, the imaging effect of the marker portion is further enhanced.

According to some embodiments of the present application, referring to Fig. 16, the front light source (which, for example, may comprise the first front light source 1631 and the second front light source 1632) is preferably arranged such that an included angle between the light from the front light source and a plane in which the material strip is located is 45°.

By preferably disposing the front light source at an angle of 45° with respect to the material strip, the imaging effect of the marker portion is further optimized.

According to some embodiments of the present application, referring to Fig. 16, the back light source may comprise a first back light source 1641 and a second back light source 1642, and the first back light source 1641 and the second back light source 1642 are arranged on two opposite sides of the material strip 1610 in the direction perpendicular to the feeding direction, respectively, light emitted from the first back light source 1641 being projected onto the back face of the first detection region, and light emitted from the second back light source 1642 being projected onto the back face of the second detection region.

In some embodiments, the first back light source 1641 and the second back light source 1642 may be strip-shaped light sources, so the shape of the strip-shaped light source can better adapt to the shape of the material strip, thereby ensuring better lighting effect while further saving energy.

By disposing a set of back light sources to separately light the opposite positions on the two sides of the material strip, the two camera apparatuses can be enabled to shoot the cut hole at the edge of the material strip; at the same time, compared with illuminating the whole material strip by one back light source, the disposing of a set of back light sources makes it possible to adapt to different widths of the material strip, thus saving more energy.

According to some embodiments of the present application, the back light source is a red light source.

The wavelength of red light is between 625 and 740 nm, which is the color light with the longest wavelength in visible light. Its penetration ability is stronger, so that it can achieve better image effect for some bad cut holes such as those blocked by foreign materials or not completely pierced.

In some embodiments, the back light source can be a high brightness red light source, the brightness of which can be, for example, 100,000 Lx or be greater than 100,000 Lx. Thus, it is possible to further improve the image effect of cut holes in detection images.

According to some embodiments of the present application, the material strip feeding detection apparatus for a stacking machine further comprises: a prism cooperating with each camera apparatus, wherein the optical axis of said each camera apparatus is arranged to be parallel to a plane in which the material strip is located, and said each camera apparatus is capable of shooting a detection region between two first electrode plates of the material strip by means of the cooperating prism.

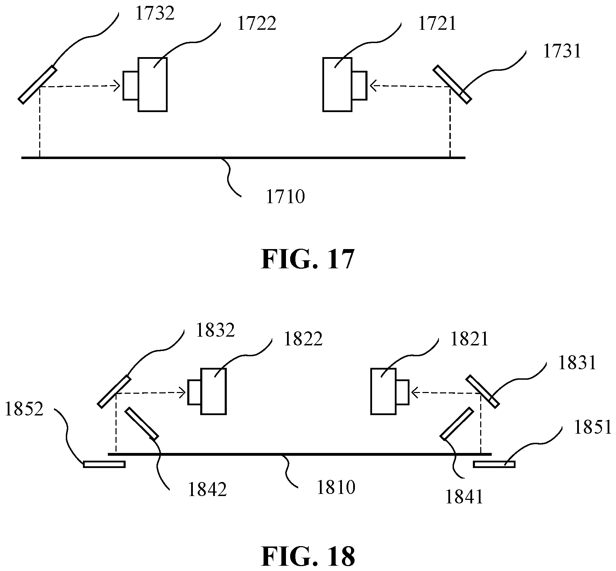

Fig. 17 illustrates a structural schematic diagram of a material strip feeding detection apparatus along the feeding direction of the material strip, wherein the material strip 1710 is a cross section perpendicular to the feeding direction. In some embodiments, for a first camera apparatus 1721, by means of a first prism 1731 cooperating therewith, the first camera apparatus 1721 may be arranged such that its optical axis is parallel to the plane in which the material strip 1710 is located; similarly, for a second camera apparatus 1722, by means of a second prism 1732 cooperating therewith, the second camera apparatus 1722 may be arranged such that its optical axis is parallel to the plane in which the material strip 1710 is located.

Since the focal length of each camera apparatus is fixed and the image of the detection region can be refracted into the lens of the camera apparatus through the cooperation of the prism with the camera apparatus, it is possible to further save the mounting space of the camera apparatus while ensuring that the material strip image shot by the camera apparatus is clear, for example, the mounting height of the camera apparatus can be reduced to one-third of the original height.

According to some embodiments of the present application, a material strip feeding detection apparatus for a stacking machine is provided. Referring to Fig. 18, for a first camera apparatus 1821, by means of a first prism 1831 cooperating therewith, the first camera apparatus 1821 may be arranged such that its optical axis is parallel to the plane in which the material strip 1810 is located; similarly, for a second camera apparatus 1822, by means of a second prism 1832 cooperating therewith, the second camera apparatus 1822 may be arranged such that its optical axis is parallel to the plane in which the material strip 1810 is located.

The front light source comprises a first front light source 1841 and a second front light source 1842, and the first front light source 1841 and the second front light source 1842 are arranged on two opposite sides of the material strip 1810 in a direction perpendicular to the feeding direction, respectively, light emitted from the first front light source 1841 being projected onto the front face of the first detection region, and light emitted from the second front light source 1842 being projected onto the front face of the second detection region. Moreover, the first front light source 1841 and the second front light source 1842 are disposed at an angle of 45° with respect to the material strip 1810. Here, the first front light source 1841 and the second front light source 1842 are both white strip-shaped light sources.

The back light source may comprise a first back light source 1851 and a second back light source 1852, and the first back light source 1851 and the second back light source 1852 are arranged on two opposite sides of the material strip 1810 in the direction perpendicular to the feeding direction, respectively, light emitted from the first back light source 1851 being projected onto the back face of the first detection region, and light emitted from the second back light source 1852 being projected onto the back face of the second detection region. The back light source is a high brightness red light source with a brightness of 100,000 Lx.

In some embodiments, the first camera apparatus 1821, the first prism 1831, the first front light source 1841, and the first back light source 1851 may be mounted on a mounting mechanism so that the position of each of these parts is relatively fixed; similarly, the second camera apparatus 1822, the second prism 1832, the second front light source 1842, and the second back light source 1852 may be mounted on another mounting mechanism so that the position of each of these parts is relatively fixed. Since the widths of different models of material strips are different (the width range is generally 180-650 mm) and the view fields of the industrial cameras are each only 25*30 mm, when the width of the material strip changes, through the above mounting mechanism, it is convenient to increase or decrease the distance between the two sets of devices, so as to adapt to the detection of different models of material strips.

In some embodiments, the first camera apparatus 1821, the first front light source 1841 and the first back light source 1851 as well as the second camera apparatus 1822, the second front light source 1842 and the second back light source 1852 can be controlled by a first controller, where the first controller may be a control unit in the CCD visual detection system or a programmable controller for controlling the production line of stacked battery cells.

In some embodiments, the transport of the material strip is controlled by a second controller (i.e., a programmable controller), and the cut holes are sensed by a photosensitive sensor arranged at the edge of the material strip, and when the cut hole is sensed, the sensor sends a signal to the first controller, and the first controller then triggers shooting by the first camera apparatus and the second camera apparatus to acquire a material strip image. By identifying the cut holes and the marker portions in the two material strip images, and by comparing and verifying the detection results of the two material strip images, the cut hole deviations and the marker portion detection results for this detection region are acquired, and the above results are uploaded and saved to the second controller.

The second controller indicates the lamination position for laminating an electrode plate by counting the first electrode plates on the material strip and in combination with the corresponding marker portion detection result for each first electrode plate.

The second controller determines the position of the tail plate of each battery cell material strip by counting the first electrode plates on the material strip, and aligns the cutting position with the cutting mechanism based on the corresponding cut hole deviation of this tail plate, so as to cut the material strip into battery cell material strips precisely.

Embodiments of a third aspect of the present application provide a stacking machine, comprising: a conveying mechanism configured to convey a material strip; a material strip feeding detection apparatus according to the second aspect described above; a cutting mechanism; and a second controller configured to control the material strip feeding detection apparatus to perform feeding deviation rectification of the material strip conveyed on the conveying mechanism, and control the cutting mechanism to cut the material strip on the conveying mechanism after the feeding deviation rectification.

Embodiments of a fourth aspect of the present application provide an electronic device, comprising: at least one processor; and a memory communicatively connected to the at least one processor, wherein the memory stores instructions executable by the at least one processor, the instructions being executed by the at least one processor to enable the at least one processor to perform the material strip feeding detection method of the first aspect described above.

Embodiments of a fifth aspect of the present application provide a non-transitory computer-readable storage medium having computer instructions stored therein, wherein the computer instructions are used to cause a computer to perform the material strip feeding detection method of the first aspect described above.

Embodiments of a sixth aspect of the present application provide a computer program product comprising a computer program, wherein the computer program, when executed by a processor, implements the material strip feeding detection method of the first aspect described above.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A material strip feeding detection method for a stacking machine, the material strip comprising a plurality of first electrode plates distributed continuously in a feeding direction, and the method comprising:
shooting with at least one camera apparatus to obtain at least one material strip image;
determining whether the material strip image comprises a first marker; and
acquiring a target deviation of the first marker relative to a preset position based on the material strip image in response to determining that the material strip image comprises the first marker.

2. The method according to claim 1, wherein the material strip image at least comprises a detection region between two adjacent first electrode plates.

3. The method according to claim 2, wherein the first marker is a through hole disposed in the detection region, and the method further comprises:
before shooting with the at least one camera apparatus, turning on a front light source, light emitted from the front light source being projected onto the front face of the detection region, and/or
turning on a back light source, light emitted from the back light source being projected onto the back face of the detection region; and
determining whether the material strip image comprises a second marker, the second marker being a preset pattern formed on the front face of the detection region.

4. The method according to claim 2, wherein the first marker comprises a first cut hole and a second cut hole, and the first cut hole and the second cut hole are located on two opposite sides of the material strip in a direction perpendicular to the feeding direction; and the detection region comprises a first detection region and a second detection region located between the two adjacent first electrode plates, the first cut hole being located in the first detection region and the second cut hole being located in the second detection region; and
the at least one camera apparatus comprises a first camera apparatus and a second camera apparatus, and the material strip image comprises a first detection image obtained by shooting the front face of the first detection region using the first camera apparatus and a second detection image obtained by shooting the front face of the second detection region using the second camera apparatus,
wherein said acquiring a target deviation of the first marker relative to a preset position based on the material strip image comprises:
acquiring the target deviation based on the first detection image and/or the second detection image in response to determining that the first detection region and the second detection region comprise the first marker.

5. The method according to claim 4, wherein said acquiring the target deviation based on the first detection image and/or the second detection image comprises:
acquiring a first deviation of the first cut hole relative to a preset position based on the first detection image;
acquiring a second deviation of the second cut hole relative to the preset position based on the second detection image; and
acquiring the target deviation based on the first deviation and the second deviation.

6. The method according to claim 5, wherein said acquiring the target deviation based on the first deviation and the second deviation comprises:
acquiring the target deviation based on the first deviation and the second deviation in response to an absolute value of a difference between the first deviation and the second deviation being not greater than a preset threshold.

7. The method according to claim 5, further comprising:
outputting alert information in response to an absolute value of a difference between the first deviation and the second deviation being greater than a preset threshold.

8. The method according to claim 4, further comprising:
outputting alert information in response to determining that at least one of the first detection region and the second detection region does not comprise the first marker.

9. The method according to claim 3, wherein the detection region comprises a first detection region and a second detection region located between the two adjacent first electrode plates, and the second marker comprises a first marker portion located in the first detection region and a second marker portion located in the second detection region,
wherein said determining whether the material strip image comprises a second marker comprises:
detecting whether the first detection image comprises the first marker portion;
detecting whether the second detection image comprises the second marker portion; and
determining whether the front face of the detection region comprises the second marker based on a detection result regarding the first marker portion in the first detection image and a detection result regarding the second marker portion in the second detection image.

10. The method according to claim 9, wherein said determining whether the front face of the detection region comprises the second marker comprises:
determining that the front face of the detection region comprises the second marker in response to determining that the first detection image comprises the first marker portion and the second detection image comprises the second marker portion.

11. The method according to claim 9, wherein the method further comprises:
outputting alert information in response to determining that one of the first detection image and the second detection image does not comprise the second marker.

12. The method according to claim 9, wherein the method further comprises:
determining that the back face of the detection region comprises the second marker in response to determining that neither of the first detection image and the second detection image comprises the second marker.

13. The method according to claim 2, wherein the at least one camera apparatus comprises two sets of camera apparatuses, the two sets of camera apparatuses being disposed at an interval of a preset distance, and said shooting with at least one camera apparatus comprises:
shooting the front face of the detection region between the two adjacent first electrode plates using one set of the two sets of camera apparatuses; and
shooting the back face of the detection region between the two adjacent first electrode plates using the other set of the two sets of camera apparatuses.

14. The method according to any one of claims 1 to 13, wherein the target deviation comprises a deviation of the first marker relative to the preset position in the feeding direction.

15. The method according to any one of claims 1 to 13, wherein the position of the at least one camera apparatus is fixed, and the preset position is an optical center of the corresponding camera apparatus.

16. A material strip feeding detection apparatus for a stacking machine, the material strip comprising a plurality of first electrode plates distributed continuously in a feeding direction, and the apparatus comprising:
at least one camera apparatus configured to shoot the material strip to obtain at least one material strip image; and
an image processing apparatus configured to determine whether the material strip image comprises a first marker, and determine a target deviation of the first marker relative to a preset position based on the material strip image in response to determining that the material strip image comprises the first marker.

17. The apparatus according to claim 16, wherein the image processing apparatus comprises:
a first determination unit configured to determine whether the material strip image comprises the first marker; and
an acquisition unit configured to acquire a target deviation of the first marker relative to a preset position based on the material strip image in response to determining that the material strip image comprises the first marker.

18. The apparatus according to claim 16, wherein the target deviation comprises a deviation of the first marker relative to the preset position in the feeding direction.

19. The apparatus according to any one of claims 16-18, wherein the material strip image at least comprises a detection region between two adjacent first electrode plates.

20. The apparatus according to claim 19, wherein the first marker is a through hole disposed in the detection region, and the apparatus further comprises:
a front light source and a back light source; and
a first controller configured to, before shooting with the at least one camera apparatus, turn on the front light source, light emitted from the front light source being projected onto the front face of the detection region, and/or
turn on the back light source, light emitted from the back light source being projected onto the back face of the detection region; and
the first determination unit is further configured to determine whether the material strip image comprises a second marker, the second marker being a preset pattern formed on the front face of the detection region.

21. The apparatus according to claim 20, wherein the first marker comprises a first cut hole and a second cut hole, and the first cut hole and the second cut hole are located on two opposite sides of the material strip in a direction perpendicular to the feeding direction; and the detection region comprises a first detection region and a second detection region located between the two adjacent first electrode plates, the first cut hole being located in the first detection region and the second cut hole being located in the second detection region; and
the at least one camera apparatus comprises a first camera apparatus and a second camera apparatus, and the material strip image comprises a first detection image obtained by shooting the front face of the first detection region using the first camera apparatus and a second detection image obtained by shooting the front face of the second detection region using the second camera apparatus,
wherein the acquisition unit is configured to acquire the target deviation based on the first detection image and/or the second detection image in response to determining that the first detection region and the second detection region comprise the first marker.

22. The apparatus according to claim 21, wherein the acquisition unit is configured to:
acquire a first deviation of the first cut hole relative to a preset position based on the first detection image;
acquire a second deviation of the second cut hole relative to the preset position based on the second detection image; and
acquire the target deviation based on the first deviation and the second deviation.

23. The apparatus according to claim 22, wherein the acquisition unit is further configured to:
acquire the target deviation based on the first deviation and the second deviation in response to an absolute value of a difference between the first deviation and the second deviation being not greater than a preset threshold.

24. The apparatus according to claim 22, further comprising:
a first output unit,
wherein the first controller is further configured to control the first output unit to output alert information in response to an absolute value of a difference between the first deviation and the second deviation being greater than a preset threshold.

25. The apparatus according to claim 24, wherein the first controller is further configured to:
control the first output unit to output the alert information in response to determining that at least one of the first detection region and the second detection region does not comprise the first marker.

26. The apparatus according to claim 20, wherein the detection region comprises a first detection region and a second detection region located between the two adjacent first electrode plates, and the second marker comprises a first marker portion located in the first detection region and a second marker portion located in the second detection region,
wherein the first determination unit is configured to:
detect whether the first detection image comprises the first marker portion;
detect whether the second detection image comprises the second marker portion; and
determine whether the front face of the detection region comprises the second marker based on a detection result regarding the first marker portion in the first detection image and a detection result regarding the second marker portion in the second detection image.

27. The apparatus according to claim 26, wherein the first determination unit is configured to:
determine that the front face of the detection region comprises the second marker in response to determining that the first detection image comprises the first marker portion and the second detection image comprises the second marker portion.

28. The apparatus according to claim 26, further comprising:
a second output unit,
wherein the first controller is further configured to control the second output unit to output alert information in response to determining that one of the first detection image and the second detection image does not comprise the second marker.

29. The apparatus according to claim 26, further comprising:
a second determination unit configured to determine that the back face of the detection region comprises the second marker in response to determining that neither of the first detection image and the second detection image comprises the second marker.

30. The apparatus according to claim 19, wherein the at least one camera apparatus comprises two sets of camera apparatuses, the two sets of camera apparatuses being disposed at an interval of a preset distance, and
one set of the two sets of camera apparatuses being configured to shoot the front face of the detection region between the two adjacent first electrode plates; and
the other set of the two sets of camera apparatuses being configured to shoot the back face of the detection region between the two adjacent first electrode plates.

31. The method according to any one of claims 16 to 30, wherein the position of the at least one camera apparatus is fixed, and the preset position is an optical center of the camera apparatus.

32. The apparatus according to any one of claims 21 to 29, wherein the front light source comprises a first front light source and a second front light source, and the first front light source and the second front light source are arranged on two opposite sides of the material strip in the direction perpendicular to the feeding direction, respectively, light emitted from the first front light source being projected onto the front face of the first detection region, and light emitted from the second front light source being projected onto the front face of the second detection region.

33. The apparatus according to any one of claims 20 to 32, wherein the front light source is arranged such that an included angle between the light emitted from the front light source and a plane in which the material strip is located is 45°-75°.

34. The apparatus according to any one of claims 20 to 32, wherein the front light source is arranged such that an included angle between the light from the front light source and a plane in which the material strip is located is 45°.

35. The apparatus according to any one of claims 21 to 29, wherein the back light source comprises a first back light source and a second back light source, and the first back light source and the second back light source are arranged on two opposite sides of the material strip in the direction perpendicular to the feeding direction, respectively, light emitted from the first back light source being projected onto the back face of the first detection region, and light emitted from the second back light source being projected onto the back face of the second detection region.

36. The apparatus according to any one of claims 20 to 35, wherein the back light source is a red light source.

37. The apparatus according to any one of claims 20 to 36, further comprising: a prism cooperating with each camera apparatus, wherein the optical axis of said each camera apparatus is arranged to be parallel to a plane in which the material strip is located, and said each camera apparatus is capable of shooting a detection region between two first electrode plates of the material strip by means of the cooperating prism.

38. A stacking machine, comprising:
a conveying mechanism configured to convey a material strip;
a material strip feeding detection apparatus according to any one of claims 16 to 37;
a cutting mechanism; and
a second controller configured to control the material strip feeding detection apparatus to perform feeding deviation rectification of the material strip conveyed on the conveying mechanism, and control the cutting mechanism to cut the material strip on the conveying mechanism after the feeding deviation rectification.

39. An electronic device, comprising:
at least one processor; and
a memory communicatively connected to the at least one processor, wherein
the memory stores instructions executable by the at least one processor, the instructions being executed by the at least one processor to enable the at least one processor to perform the method according to any one of claims 1-15.

40. A non-transitory computer-readable storage medium storing computer instructions, wherein the computer instructions are used for causing the computer to perform the method according to any one of claims 1-15.

41. A computer program product comprising a computer program, wherein the computer program, when executed by a processor, implements the method according to any one of claims 1-15.
